# EUROPÄISCHE PATENTSCHRIFT

(11) **EP 3 728 380 B1**
(45) Veröffentlichungstag und Bekanntmachung des Hinweises auf die Patenterteilung: **12.01.2022**
(21) Anmeldenummer: 18815232.6
(22) Anmeldetag: 14.12.2018
(51) Int. Cl.: C08G 18/73, C08G 18/08, C08G 18/22, C08G 18/32, C09J 175/04, C08G 18/80, C08G 18/70, C09D 175/04

(54) **FROSTBESTÄNDIGE WASSERLACKE AUF BASIS VON POLYISOCYANATEN**
FREEZE RESISTANT WATER-BASED VARNISH, BASED ON POLYISOCYANATES
PEINTURE À L'EAU RÉSISTANTE AU GEL À BASE DE POLYISOCYANATES

(30) Priorität: 21.12.2017 EP 17209392
(43) Veröffentlichungstag der Anmeldung: 28.10.2020
(73) Patentinhaber: Covestro Deutschland AG, 51373 Leverkusen (DE)
(72) Erfinder: ACHTEN, Dirk, 51375 Leverkusen (DE); GOLLING, Florian, 40237 Düsseldorf (DE); SICKING, Frank, 51491 Overath (DE); FLECK, Olaf, 51467 Bergisch-Gladbach (DE); WEIKARD, Jan, 51375 Leverkusen (DE)
(74) Vertreter: Levpat
(86) Internationale Anmeldenummer: PCT/EP2018/084935
(87) Internationale Veröffentlichungsnummer: WO 2019/121387

(56) Entgegenhaltungen:
- US-A- 4 260 532
- US-A- 5 191 012
- US-A1- 2008 182 946

## Beschreibung

Die vorliegende Erfindung betrifft die Verwendung von hydrophilierten Polyisocyanaten zur Herstellung wasserverdünnter Beschichtungszusammensetzungen.

2K-Wasserlacke sind eine Spezialität im Bereich der wasserbasierten Lackformulierungen und werden für eine Vielzahl von Anwendungen im Bereich Holzlacke, Fußbodenbeschichtungen, Plastiklacke bis hin zu Automobillacken und Korrosionsschutzlacken eingesetzt. Isocyanatbasierte Zweikomponentensysteme enthalten bevorzugt hochmolekulare und schnelltrocknende Polymere mit gegenüber Isocyanat reaktiven Gruppen in emulgierter oder dispergierter Form. Besagte Polymere werden durch kurz vor Applikation zugesetzte hydrophilierte Isocyanate als zweite Komponente nach Trocknung und Filmbildung unter Ausbildung von Urethan- und Harnstoffgruppen vernetzt. Siehe dazu auch: P. Jacobs, K. Best, M. Dvorchak, M. Shaffer, T. Wayt, P. Yu "Two-Component,Waterborne Polyurethane Coatings: Now and Into the Next Century", Paint and Coatings Industry, October, 1998, p. 117.; S.L. Bassner and C.R. Hegedus "A Review of Two-Component Water-Borne Polyurethane Coatings for Industrial Applications"; Z.W. Wicks, F.N. Jones and S.P. Pappas "Organic Coatings, Science and Technology",John Wiley & Sons, NY, Vol. 1, 1992, p. 194; L. Thiel and R. Becker "Catalytic Mechanism of Polyurethane Formation", Adv. In Urethane Science and Technology, Ed. K.C. Frisch and D. Klempner, 12, 1993, p. 59; E.P. Spiller, J.W. Rosthauser "Catalysis in Aliphatic Isocyanate-Alcohol Reactions", Water-Borne, Higher Solids Coatings Symposium, New Orleans, Feb. 1987, p. 460; Kurt Best and Dr. Edward Squiller, 2-Component Polyurethane Topcoats October 1, 2008 PCI magazine.

Für alle wässrigen Polymerdispersionen gilt, dass sie in einem nur sehr begrenzten Temperaturbereich als Lackformulierung beständig sind. Sowohl bei tiefen als auch bei hohen Temperaturen neigen diese Wasserlackformulierungen zur Koagulation. Dies ist durch den Einsatz von Wasser als "Verdünner" und die komplexe Stabilisierung von Polymeren als Dispersionen / Emulsionen in Wasser über hydrophile und/oder hydrophobe, ionische und/oder nichtionische Wechselwirkungen zu erklären. Die Methoden zur Stabilisierung von organischen Makromolekülen in Wasser sind dem Fachmann bekannt und ausführlich beschrieben zum Beispiel in R. G. Gilbert "Emulsion polymerization, a mechanistic approach", Academic Press, London, 1995; Poehlein, GW., Vol. 6: 1 "Dispersionen und Emulsionen, Eine Einführung in die Kolloidik feinverteilter Stoffe einschließlich der Tonminerale, "Encyclopedia of Polymer Science and Engineering, 2nd Ed., Mark, HF, et al., Eds. 1986.; Lagaly, Gerhard, Schulz, Oliver, Zimehl, Ralf, Rosen, M; Surfactants and Interfacial Phenomena, John Wiley, 1989, Surfactants and Interfacial Phenomena, 4th Edition Milton J. Rosen, Joy T. Kunjappu ISBN: 978-0-470-54194-4 March 2012.

Weiter ist der Feststoffgehalt von wasserbasierten Zweikomponentenlacken aus praktischen Gründen in den meisten Fällen typischerweise auf höchstens 60 Gew.-% limitiert, da oberhalb von 60 Gew.-% die Viskosität stark ansteigt und die mechanische und kolloidale Stabilität von wässrigen PolymerDispersionen überproportional abnimmt. Weiter zeigen typische für den Einsatz als Lacke (Filmbildner) geeigneten Polymerdispersionen eine relativ niedrige Scherstabilität und Transportstabilität, so dass vor deren Einsatz in der Anwendung besonders als 2K Lack in Kombination mit hydrophilierten Isocyanaten noch häufig grobes Koagulat / Trocknungsreste durch Filterprozesse entfernt werden müssen.

Auf der anderen Seiten bestehen klassische lösemittelbasierte Zweikomponentenlacke mit Isocyanat im Vergleich zu Wasserlacken aus vergleichsweise niedermolekularen gegenüber Isocyanat reaktiven Verbindungen (Harze) und Polyisocyanaten (z.B. aliphatische Isocyanat funktionelle Allophanate, Isocyanurate, Biurete, Urethane). Die immer noch hohe Viskosität der eingesetzten Harze wird typischerweise durch Lösungsmittel verdünnt. Gebräuchliche Feststoffkonzentrationen solcher lösemittelbasierter-2K Lacke liegen bei 20-80 Gew.-%. Ein weiteres Problem dieser 2K Lösungsmittellacke ist die vergleichsweise kurze Topfzeit (Zeit bis zur Verdopplung der Viskosität der Formulierung nach dem Vermischen der Reaktivkomponenten) durch Reaktion der Isocyanate mit den gegenüber Isocyanat reaktiven Verbindungen. Der Einsatz von Lösungsmittellacken gerät aufgrund der Klimawirksamkeit der verwendeten Lösungsmittel und deren Gefahrenpotentials für die Gesundheit der Anwender durch z.B. eine hohe Brennbarkeit immer mehr in die Kritik. Allerdings zeigen diese lösemittelbasierten Lackformulierungen vor Abmischung der reaktiven Komponenten A (Isocyanatphase) und B (isocyanatreaktive Phase) eine hervorragende Lager-, Temperatur- und Transportstabilität.

Ein Ansatz zur Herstellung wasserverdünnter Polyisocyanatzusammensetzungen ist in US 5,191,012 beschrieben. Hier wird ein hydrophiliertes Polyisocyanat zusammen mit geringen Mengenanteilen eines Polyamins in Wasser gelöst. Das Polyamin reagiert mit Teilen des Polyisocyanats zu einem Polyharnstoff, der das verbleibende unreagierte Polyisocyanat verkapselt und so von der Wasserphase trennt. Hierdurch wird eine langfristige Lagerstabilität des in Wasser dispergierten Polyisocyanats erreicht.

Aufgabe der vorliegenden Erfindung war es nun, niedrigviskose und lösungsmittelarme lager-, temperatur, und transport-(Scher-) stabile isocyanatbasierte Lackformulierungen zu entwickeln, die die Vorteile der Stabilität von Lösungsmittellacken mit den positiven Umweltaspekten von Wasserlacken kombinieren. Diese Aufgabe wird gelöst durch die Ausführungsformen, die in den Patentansprüchen und in der untenstehenden Beschreibung offenbart sind.

Überraschenderweise wurde gefunden, dass es möglich ist, isocyanatbasierte Lacke mit hervorragenden Verarbeitungseigenschaften und Produkteigenschaften auf Basis von hydrophilen Polyisocyanaten zu erhalten. Die Viskosität dieser Lacke wird durch die Zugabe von Wasser soweit reduziert, dass eine Verarbeitung gut möglich ist. Einem solchen Lack können bei Bedarf gegenüber Isocyanat reaktive Verbindungen, die in Wasser löslich und / oder in Wasser leicht dispergierbar sind, zugefügt werden.

Die vorliegende Erfindung betrifft eine Beschichtungszusammensetzung enthaltend eine mit Wasser verdünnte Isocyanatkomponente A mit einer Isocyanatkonzentration zwischen 2 Gew.-% und 40 Gew.-% definiert als Gewichtsanteil der Isocyanatgruppe am Gesamtmolekül, welche wenigstens ein hydrophiliertes Polyisocyanat enthält, dessen Isocyanatgruppen direkten Kontakt mit Wasser haben, wobei die Beschichtungszusammensetzung einen Gehalt an polymeren Polyolen von höchstens 10 Gew.-% aufweist.

Das molare Verhältnis von Isocyanatgruppen zu isocyanatreaktiven Gruppen liegt in einer Ausführungsform, bei der keine isocyanatreaktive Komponente B zugesetzt wird, zwischen 0,5 und 20,0, bevorzugt zwischen 1,1 und 20,0, stärker bevorzugt zwischen 1,1 und 10,0 und am stärksten bevorzugt zwischen 1,1 und 3,0. In Ausführungsfonnen, bei denen eine isocyanatreaktive Komponente B wie weiter unten in dieser Anmeldung definiert anwesend ist, liegt das molare Verhältnis von Isocyanatgruppen isocyanatreaktiven Gruppen zwischen 0,5 und 10,0, bevorzugt zwischen 0,5 und 3,0 und noch stärker bevorzugt zwischen 0,7 und 3,0. Als "isocyanatreaktive Gruppen" werden in dieser Anmeldung Hydroxyl-, Thiol- und Aminogruppen verstanden.

Der Begriff "Isocyanatkomponente A" bezeichnet die Gesamtheit aller in der erfindungsgemäßen Zusammensetzung enthaltenen Verbindungen, die wenigstens eine Isocyanatgruppe enthalten. Da die Isocyanatkomponente A erfindungsgemäß eine Vernetzung bewirken soll, besteht sie vorzugsweise zu einem überwiegenden Teil aus monomeren und/oder oligomeren Polyisocyanaten wie nachfolgend definiert.

Gemäß einer Ausführungsform der Erfindung enthält die Polyisocyanatkomponente A insgesamt höchstens 30 Gew.-%, insbesondere höchstens 20 Gew.-%, höchstens 15 Gew.-%, höchstens 10 Gew.-%, höchstens 5 Gew.-% oder höchstens 1 Gew.-%, jeweils bezogen auf ihr Gesamtgewicht an aromatischen Polyisocyanaten. Wie hier verwendet, bedeutet "aromatisches Polyisocyanat" ein Polyisocyanat, welches mindestens eine aromatisch gebundene Isocyanatgruppe aufweist. Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform der Erfindung enthält die Polyisocyanatkomponente A nur solche Polyisocyanate, die ausschließlich aliphatisch und/oder cycloaliphatisch gebundene Isocyanat-Gruppen aufweisen. Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Die Isocyanatkomponente A hat eine Isocyanatkonzentration zwischen 2 Gew.-% und 40 Gew.-%, bevorzugt zwischen 5 Gew.-% und 30 Gew.-%, bevorzugt zwischen 8 Gew.-% und 25 Gew.-%. Die Isocyanatkonzentration wird dabei als Gewichtsanteil der Isocyanatgruppe NCO am Gesamtmolekül berechnet. Die Isocyanatkonzentration wird gebräuchlich über Isocyanattitration bestimmt.

In einer bevorzugten Ausführungsform enthält dieZusammensetzung eine Isocyanatkonzentration zwischen 2 Gew.-% und 40 Gew.-%, bevorzugt zwischen 5 Gew.-% und 30 Gew.-%, bevorzugt zwischen 8 Gew.-% und 25 Gew.-%. Die Isocyanatkonzentration wird dabei auf den Feststoffgehalt der Beschichtungszusammensetzung bezogen. Der Feststoffgehalt wird definiert als der Gehalt an nicht flüchtigen Bestandteilen der Beschichtungszusammensetzung. Die Isocyanatkonzentration wird gebräuchlich über Isocyanattitration bestimmt.

"Direkter Kontakt von Isocyanatgruppen mit Wasser" bedeutet, dass in der einsatzfertigen Beschichtungszusammensetzung keine räumliche Trennung zwischen den Isocyanatgruppen und der Wasserphase vorliegt. Insbesondere existiert keine feste Phase, welche das Isocyanat von der Wasserphase trennt. In einem aus dem Stand der Technik bekannten System wird ein kleiner Anteil der Isocyanatgruppen des Polyisocyanats durch Reaktion mit einem Polyamin zu einem Polyharnstoff umgesetzt, der die nicht abreagierten Anteile des Polyisocyanats verkapselt und so eine feste Phase bildet. Besagte feste Phase trennt das verbleibende Polyisocyanat von der Wasserphase. In der erfindungsgemäßen Beschichtungszusammensetzung hingegen liegt die Polyisocyanatkomponente A in der einsatzfertigen Beschichtungszusammensetzung nicht in verkapselter Form vor. Es ist allerdings nicht auszuschließen, dass ein geringer Anteil der Isocyanatgruppen in der Polyisocyanatkomponente A mit Wasser reagiert. Dem Fachmann ist dabei klar, dass nur ein kleiner Teil der Isocyanatgruppe an der Grenzfläche der Isocyanatteilchen echten Kontakt mit Wasser hat. Im Falle von hydrophilierten Isocyanaten wir die Dispersion von Isocyanaten in Wasser dabei nochmal zusätzlich ionisch oder sterisch stabilisiert. In der Tendenz wird die Teilchengröße dabei erniedrigt, die Teilchengröße hydrophilierter in Wasser dispergierter Isocyanate weisen dabei typischerweise kleinere Teilchen bzw. eine größere Wasserkontaktphase auf als nicht hydrophilierte Isocyanate.

"Einsatzfertig" bedeutet hier, dass die Beschichtungszusammensetzung ohne weitere Vorbereitung, insbesondere ohne weitere vorangehende Reaktion ihrer Bestandteile miteinander, auf eine Oberfläche aufgetragen und dort ausgehärtet werden kann.

In den Ausführungsformen der vorliegenden Erfindung, die die Reaktion der Polyisocyanatkomponente A mit isocyanatreaktiven Verbindungen, insbesondere den weiter unten definierten wasserlöslichen Polyolen, vorsehen, werden diese isocyanatreaktiven Verbindungen vorzugsweise höchstens 8 Stunden, bevorzugt höchstens 4 Stunden und besonders bevorzugt höchstens 1 Stunde vor dem Auftragen auf die Oberfläche mit der mit Wasser verdünnten Polyisocyanatzusammensetzung A vermischt. In jedem Fall erfolgt das Vermischen aber wenigstens 30 Minuten vor dem Auftragen auf die Oberfläche.

### Polyisocyanat

Wenn hier allgemein von "Polyisocyanaten" die Rede ist, so sind damit monomere und/oder oligomere Polyisocyanate gleichermaßen gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die hydrophilierten Polyisocyanate können grundsätzlich monomere oder oligomere Polyisocyanate sein. Soweit das hydrophilierte Polyisocyanat ein monomeres Polyisocyanat ist, so sind alle nachfolgend für den Aufbau oligomerer Polyisocyanate beschriebenen Diisocyanate auch für den Einsatz als monomeres Polyisocyanat geeignet. Bevorzugt werden als hydrophilierte Polyisocyanate aber solche Verbindungen eingesetzt, die durch Modifikation der nachfolgend beschriebenen oligomeren Polyisocyanate erhalten werden. Im Folgenden die Grundstrukturen solcher oligomerer Polyisocyanate beschrieben, die durch die Reaktion mit hydrophilierenden Gruppen zu den erfindungsgemäßen hydrophilierten Polyisocyanaten umgesetzt werden können.

Die Herstellung oligomerer Polyisocyanate aus monomeren Diisocyanaten wird hier auch als Oligomerisierung monomerer Diisocyanate bezeichnet. Diese "Oligomerisierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

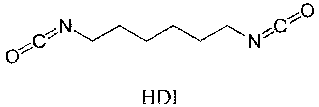

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

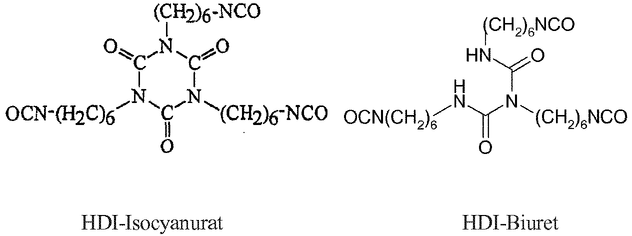

Erfindungsgemäß werden für die Herstellung der erfindungsgemäßen Beschichtungszusammensetzungen enthaltend hydrophilierte Polyisocyanate monomerarme Polyisocyanate eingesetzt (d.h. arm an monomeren Diisocyanaten). Gemäß einer Ausführungsform der Erfindung besteht das eingesetzte hydrophilierte Polyisocyanat vollständig oder zu mindestens 80, 85, 90, 95, 98, 99 oder 99,5 Gew.-%, jeweils bezogen auf das Gewicht der Gesamtmenge hydrophilierte Isocyanate aus oligomeren Polyisocyanaten.

Die erfindungsgemäß vorgesehene Anwesenheit oligomerer Polyisocyanate und die hierfür angegebenen Gehalte beziehen sich auf die ursprünglich, d.h. vor Beginn der katalytischen Urethanisierung und oder Trimerisierung bereitgestellte Zusammensetzung d.h. diese werden nicht etwa während des Verfahrens als Zwischenprodukte gebildet, sondern die oligomeren Polyisocyanate liegen bereits zu Beginn der Reaktion in der erfindungsgemäßen Beschichtungszusammensetzung als Edukt vor.

"Monomerarm" und "arm an monomeren Diisocyanaten" wird hier in Bezug auf die Zusammensetzung der hydrophilierten Isocyanate verwendet.

Besonders praxisgerechte Ergebnisse stellen sich ein, wenn die Isocyanatkomponente A einen Anteil an monomeren Diisocyanaten von höchstens 20 Gew.-%, insbesondere höchstens 15 Gew.-% oder höchstens 10 Gew.-%, oder höchstens 5 Gew.% jeweils bezogen auf das Gewicht der Beschichtungszusammensetzung, aufweist. Vorzugsweise weist die Isocyanatkomponente A einen Gehalt an monomeren Diisocyanaten von höchstens 2 Gew.-%, vorzugsweise höchstens 1 Gew.-%, besonders bevorzugt höchstens 0,5 Gew.-%, jeweils bezogen auf das Gewicht der Beschichtungszusammensetzung, auf. Praxisgerecht heißt in diesem Zusammenhang auch, dass eine geringe Menge an monomeren Isocyanaten einen einfacheren und sichereren Umgang mit den erfindungsgemäßen Beschichtungszusammensetzung erlaubt. Wobei ein hydrophiliertes monomeres Isocyanat in diesem Zusammenhang erfindungsgemäß nicht in die Kategorie monomer Isocyanate fällt.

Besonders praxisgerechte Ergebnisse stellen sich ein, wenn die Beschichtungszusammensetzung im Wesentlichen frei von monomeren Diisocyanaten ist. Als frei von monomeren Diisocyanaten werden hierbei Zusammensetzungen bzw. Formulierungen mit einem Diisocyanatgehalt von ≤ 0,1% bezeichnet.

Besonders bevorzugt ist, dass die Isocyanatkomponente A monomerarm ist. In der Praxis lässt sich dies insbesondere dadurch erzielen, dass sich bei der Herstellung des oligomeren Polyisocyanats an die eigentliche Oligomerisierungsreaktion in jedem Fall mindestens ein weiterer Verfahrensschritt zur Abtrennung der nicht umgesetzten überschüssigen monomeren, modifizierten Diisocyanate anschließt. Diese Monomerenabtrennung kann besonders praxisgerecht nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Die oligomeren Polyisocyanate werden üblicherweise durch Oligomerisierung einfacher aliphatischer, cycloaliphatischer, araliphatischer und/oder aromatischer monomerer Diisocyanate oder Mischungen solcher monomeren Diisocyanate erhalten.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

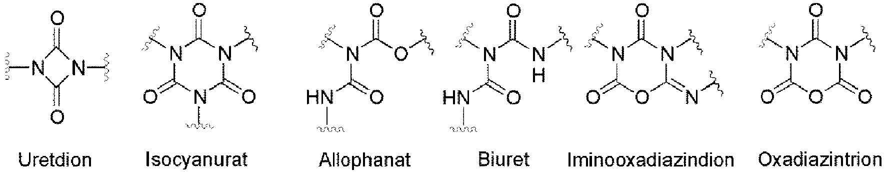

In einer besonders bevorzugten Ausführungsform der Erfindung, enthalten die oligomeren Polyisocyanate wenigstens eine Struktur ausgewählt aus der Gruppe bestehend aus Allophanat, Uretdion, Isocyanurat, Biuret, Iminooxadiazindion und Oxadiazintrion.

Überraschend hat sich herausgestellt, dass es vorteilhaft sein kann, oligomere Polyisocyanate einzusetzen, die eine Mischung aus mindestens zwei oligomeren Polyisocyanaten darstellen, wobei sich die mindestens zwei oligomeren Polyisocyanate in ihrer Struktur unterscheiden. Die oligomere Struktur der oligomeren Polyisocyanate ist vorzugsweise ausgewählt aus der Gruppe bestehend aus Allophanat Uretdion-, Isocyanurat-, Allophanat-, Biuret-, Iminooxadiazindion- und Oxadiazintrionstruktur und deren Mischungen. Derartige Ausgangsmischungen können insbesondere im Vergleich zu oligomeren Polyisocyanaten nur einer definierten Struktur zu einer Beeinflussung des Tg-Wertes führen, was für viele Anwendungen vorteilhaft ist.

Gemäß einer anderen Ausführungsform handelt es sich bei den oligomeren Isocyanaten um solche, die oligomere Polyisocyanate nur einer einzelnen definierten oligomeren Struktur, beispielsweise ausschließlich oder größtenteils Isocyanuratstruktur, enthalten. Somit werden bevorzugt oligomere Polyisocyanate einer einzelnen definierten oligomeren Struktur eingesetzt, wobei die oligomere Struktur aus der Gruppe bestehend aus Uretdion-, Isocyanurat-, Allophanat-, Biuret-, Iminooxadiazindion- und Oxadiazintrionstrukturen ausgewählt ist. In der Regel liegen in der Zusammensetzung herstellungsbedingt aber immer oligomere Polyisocyanate mehrerer unterschiedlicher oligomerer Strukturen nebeneinander vor.

Deswegen handelt es sich bei den erfindungsgemäßen Polyisocyanaten gemäß einer weiteren Ausführungsform um solche, die hauptsächlich eine Isocyanuratstruktur aufweisen, und die oben genannten Uretdion-, Allophanat-, Biuret-, Iminooxadiazindion- und/oder Oxadiazintrionstrukturen lediglich als Nebenprodukte enthalten dürfen.

Es ist erfindungsgemäß ebenfalls möglich oligomere Polyisocyanate einzusetzen, die weitestgehend keine Isocyanuratstruktur aufweisen, und hauptsächlich mindestens einen der oben genannten Uretdion-, Allophanat-, Biuret-, Iminooxadiazindion- und/oder Oxadiazintrion-Strukturtypen enthalten. Gemäß einer besonderen Ausführungsform der Erfindung enthalten die hydrophil modifizierten Isocyanate einen Strukturtyp ausgewählt aus der Gruppe bestehend aus Uretdion-, Allophanat-, Biuret-, Iminooxadiazindion- und Oxadiazintrionstrukturen.

Ein oligomeres Polyisocyanat weist hauptsächlich eine der oben definierten Strukturen auf, wenn diese Struktur wenigstens 50 mol-% der Summe aller Uretdion-, Isocyanurat-, Allophanat-, Biuret-, Iminooxadiazindion- und Oxadiazintrionstrukturen ausmacht.

Die Uretdion-, Isocyanurat-, Allophanat-, Biuret-, Iminooxadiazindion- und/oder Oxadiazintrionstruktur in den oligomeren, hydrophil modifizierten Polyisocyanaten sowie deren Vorstufe von oligomeren Polyisocyanaten kann z.B. durch NMR-Spektroskopie bestimmt werden. Bevorzugt lässt sich hierbei die ¹³C-NMR-Spektroskopie, vorzugsweise protonenentkoppelt, einsetzen, da die genannten oligomeren Strukturen charakteristische Signale liefern.

Unabhängig vom zugrunde liegenden oligomeren Strukturtyp (Uretdion-, Isocyanurat-, Allophanat-, Biuret-, Iminooxadiazindion- und/oder Oxadiazintrionstruktur) weisen die erfindungsgemäß zur Herstellung der hydrophil modifizierten, oligomeren Polyisocyanate verwendeten oligomeren Polyisocyanate vorzugsweise eine (mittlere) NCO-Funktionalität von 1,0 bis 8,0, vorzugsweise von 1,5 bis 6, besonders bevorzugt 2,0 bis 4,0 auf.

Geeignete monomere Polyisocyanate zur Herstellung der oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3-und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136*.*

Ferner können erfindungsgemäß auch klassische aliphatische oder aromatische Isocyanat-Endgruppen tragende Präpolymere, wie beispielsweise aliphatische oder aromatische Isocyanat-Endgruppen tragende Polyether-, Polyester-, Polyacrylat, Polyepoxid oder Polycarbonat-Prepolymere als Mono- und Polyisocyanate eingesetzt werden.

### Hydrophiliertes Isocyanat

Ein "hydrophiliertes" Polyisocyanat im Sinne der vorliegenden Erfindung ist ein monomeres oder oligomeres Polyisocyanat, welches durch einen externen und/oder internen Emulgator so weit hydrophiliert ist, dass es nach Vermischung mit Wasser weder zu einer Ausbildung getrennter kontinuierlicher Phasen noch zur Ausbildung einer Dispersion mit einer durchschnittlichen Teilchengröße vom mehr als 5 µm kommt.

Ein "externer Emulgator" ist nicht kovalent an das Polyisocyanat gebunden. Er zeichnet sich durch mindestens einen hydrophilen und mindestens einen hydrophoben Teil aus. Der hydrophile Teil richtet sich nach außen und stabilisiert die eher hydrophoben Isocyanate in Wasser als Dispersionen. Der hydrophobe Teil richtet sich nach Innen und ist bevorzugt mit der Isocyanatphase mischbar. Der externe Emulgator zeichnet sich dadurch aus, dass er nicht mit dem Isocyanat reagiert. Geeignete externe Emulgatoren sind unten beschrieben.

Ein "interner Emulgator" ist ein Molekül mit wenigstens einer hydrophilierenden Gruppe und vorzugsweise auch wenigstens einer mit Isocyanatgruppen reaktive funktionellen Gruppe, welches durch Reaktion mit dem Polyisocyanat kovalent an das Polyisocyanat gebunden wird und die Ausbildung von Dispersionen des Polyisocyanats in Wasser begünstigt. Haben die entstehenden Dispersionen einen mittleren Teilchendurchmesser von kleiner 50 nm, so werden sie häufig als Lösungen in Wasser beschrieben, da sie optisch klar erscheinen. Umgekehrt können hydrophilierte Isocyanate Wasser in geringen Mengen lösen beziehungsweise sehr feinteilig dispergieren.

Die Reaktion, in der ein interner Emulgator kovalent an das Polyisocyanat gebunden wird, wird im Folgenden auch als "Modifikation" eines Polyisocyanats bezeichnet. Der interne Emulgator, wird im Folgenden auch als "Funktionalisierungsreagenz" bezeichnet. Die mit Isocyanatgruppen reaktive funktionelle Gruppe vermittelt die Bindung an das Polyisocyanat. Geeignete mit Isocyanat reaktive funktionelle Gruppen sind insbesondere Hydroxyl-, Amino- und Thiolgruppen.

Die hydrophilierende Gruppe eines Funktionalisierungsreagenzes kann eine ionisch hydrophilierende Gruppe oder eine nichtionisch hydrophilierende Gruppe sein. Erfindungsgemäß ist das Funktionalisierungsreagenz insgesamt stärker hydrophil als das Polyisocyanat, dass hiermit hydrophil modifiziert werden soll.

Ionisch hydrophilierende Gruppen sind vorzugsweise Sulfonium-, Ammonium-, Phosphonium-, Carboxylat-, Sulfonat-, Phosphonat-Gruppen oder Gruppen, die durch Salzbildung in die vorgenannten Gruppen überführt werden können (potentiell ionische Gruppen). Bevorzugte ionische oder potentiell ionische Verbindungen, die als hydrophiles Funktionalisierungsreagenz eingesetzt werden können, sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, 1,2- oder 1,3-Propylendiamin-β-ethylsulfonsäure, Ethylendiamin-propyl- oder -butylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-dio1-1,4, Polyethersulfonat, das propoxylierte Addukt aus 2-Butendiol und NaHSO₃, zum Beispiel beschrieben in DE-A 2 446 440 (Seite 5-9, Formel I-III) sowie in kationische Gruppen überführbare Bausteine wie N-Methyl-diethanolamin als hydrophile Aufbaukomponenten. Ganz besonders bevorzugt ist das hydrophile Funktionalisierungsreagenz ausgewählt aus den Natriumsalzen von N-(2-Aminoethyl)-β-alanin oder 2-(2-Amino-ethylamino-)-ethansulfonsäure oder aus Dimethylpropionsäure. In einer vorteilhaften Ausführungsform der Erfindung werden sowohl Natriumsalze von N-(2-Aminoethyl)-β-alanin oder 2-(2-Amino-ethylamino-)-ethansulfonsäure, als auch Dimethylpropionsäure als Funktionalisierungsreagenz eingesetzt.

Nichtionisch hydrophilierende Gruppen sind solche funktionellen Gruppen, die auch ohne Ausbildung eines Ions hydrophiler sind als das zu modifizierende Polyisocyanat. Bevorzugte nichtionisch hydrophilierende Gruppen sind Alkohole, Amine, Säuren und ihre Derivate, Epoxide und insbesondere Polyole, wie zum Beispiel Zucker, Polyacrylatpolyole, Polyesterpolyole, Polyetherpolyole, Polyvinylalkohole, Polycarbonatpolyole, Polyethercarbonatpolyole und Polyestercarbonatpolyole, Polyamine, OH-funktionelle Polyvinylpyrrolidone, Polyoxymethylenepolyole, Polyaldolpolyole.

Die als Funktionalisierungsreagenz erfindungsgemäß geeigneten Polyole verfügen bevorzugt über eine OH-Funktionalität von ≥ 1 bis ≤ 6. Bevorzugt sind Polyole mit einem zahlenmittleren Molekulargewicht von ≥ 100 g/mol bis ≤ 10000 g/mol und einer OH-Funktionalität von ≥ 1 bis ≤ 3, besonders bevorzugt ≥ 1 und ≤ 2. Das zahlenmittlere Molekulargewicht kann nach DIN 55672-1 durch Gelpermeationschromatographie (GPC) in Tetrahydrofuran (THF) bei 23°C bestimmt werden.

Die als Funktionalisierungsreagenz zur Herstellung der hydrophil oligomeren, modifizierten Polyisocyanate einzusetzenden Hydroxylgruppen aufweisenden Polycarbonate sind durch Reaktion von Kohlensäurederivaten, zum Beispiel Diphenylcarbonat, Dimethylcarbonat oder Phosgen mit Diolen erhältlich. Als derartige Diole kommen zum Beispiel Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente ≥ 40 Gew.-% bis ≤ 100 Gew.-% Hexandiol, bevorzugt 1,6-Hexandiol und/oder Hexandiol-Derivate, insbesondere solche, die neben endständigen OH-Gruppen Ether- oder Estergruppen aufweisen. Beispielhaft seien Produkte, die durch Umsetzung von 1 Mol Hexandiol mit mindestens 1 Mol, bevorzugt 1 bis 2 Mol Caprolacton gemäß DE-A 1 770 245 oder durch Veretherung von Hexandiol mit sich selbst zum Di- oder Trihexylenglykol erhalten wurden, genannt. Die Herstellung solcher Derivate ist zum Beispiel aus DE-A 1 570 540 bekannt. Auch die in DE-A 3 717 060 beschriebenen Polyether-Polycarbonatdiole können erfindungsgemäß als Funktionalisierungsreagenz eingesetzt werden.

Die als hydrophiles Funktionalisierungsreagenz erfindungsgemäß einsetzbaren Hydroxylpolycarbonate sollten bevorzugt linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantiol-1,2,6, Butantriol-1,2,4, Trimethylolpropan, Pentaerythrit, Chinit, Mannit, und Sorbit, Methylglykosid, 1,3,4,6-Dianhydrohexite.

Als hydrophiles Funktionalisierungsreagenz erfindungsgemäß ebenfalls einsetzbare Polyetherpolyole sind Polytetramethylenglykolpolyether, die zum Beispiel über Polymerisation von Tetrahydrofuran durch kationische Ringöffnung hergestellt werden können.

Darüber hinaus erfindungsgemäße als hydrophiles Funktionalisierungsreagenz geeignete Polyetherpolyole sind die unter Verwendung von Startermolekülen hergestellten Polyadditionsprodukte des Ethylenoxids, Propylenoxids, Butylenoxids, Styroloxids oder Epichlorhydrins, sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether.

Gemäß einer bevorzugten Ausführungsform werden erfindungsgemäß Homo- und/oder Mischpolyadditionsverbindungen von Ethylenoxid und/oder Propylenoxid eingesetzt.

Polyesterpolyole, die sich für den Einsatz als hydrophiles Funktionalisierungsreagenz zur Herstellung der oligomeren, modifizierten Polyisocyanate eignen, sind beispielsweise die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele hierfür geeigneter Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxy-ethylisocyanurat eingesetzt werden. Geeignete Dicarbonsäuren sind in diesem Zusammenhang beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2 Methylbernsteinsäure, 3,3-Diethylglutarsäure und/oder 2,2-Dimethylbernsteinsäure. Als Säurequelle können auch die entsprechenden Anhydride verwendet werden. Sofern die mittlere Funktionalität des zu veresternden Polyols größer als 2 ist, können zusätzlich auch Monocarbonsäuren, wie Benzoesäure und Hexancarbonsäure mitverwendet werden. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Gemäß einer bevorzugten Ausführungsform der Erfindung werden Polyesterpolyole basierend auf Adipinsäure und Ethylenglykol, 1,4-Butandiol, Neopentylglykol und/oder 1,6-Hexandiol als Funktionalisierungsreagenz eingesetzt.

Dazu kommen monofunktionelle Alkohole und Monoamine zum Einsatz als hydrophiles Funktionalisierungsreagenz in Betracht. Bevorzugte Monoalkohole sind aliphatische Monoalkohole mit 1 bis 18 C-Atomen, wie zum Beispiel Ethanol, n-Butanol, Ethylenglykol-monobutylether, 2-Ethylhexanol, 1-Octanol, 1-Dodecanol oder 1-Hexadecanol. Bevorzugte Monoamine sind aliphatische Monoamine, wie zum Beispiel Diethylamin, Dibutylamin, Ethanolamin, N-Methylethanolamin oder N,N-Diethanolamin und Amine der Jeffamin^{®} M-Reihe (Huntsman Corp. Europe, Belgien) oder aminofunktionelle Polyethylenoxide und Polypropylenoxide.

Ebenfalls als hydrophiles Funktionalisierungsreagenz geeignet sind Polyole, Aminopolyole oder Polyamine mit einem Molgewicht unter 400 g/mol.

Als hydrophiles Funktionalisierungsreagenz geeignete nichtionische hydrophile Verbindungen sind zum Beispiel Polyoxyalkylenether, die mindestens eine Hydroxy- oder Aminogruppe enthalten. Diese Polyether enthalten einen Anteil von 30 Gewichts-% bis 100 Gewichts-% an Ethylenoxideinheiten. In Frage kommen linear aufgebaute Polyether einer Funktionalität zwischen 1 und 3, aber auch Verbindungen der allgemeinen Formel (III),

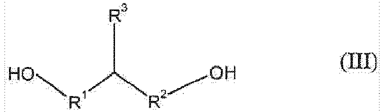

Funktionalisierungsreagenzien, die zur Herstellung der erfindungsgemäß verwendbaren hydrophilen Polyisocyanate geeignet sind, weisen bevorzugt eine Oberflächenspannung von > 20 mN/m und < 90 mN/m auf.
in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R³ für einen alkoxyterminierten Polyethylenoxidrest steht.

Weitere als Funktionalisierungsreagenz geeignete hydrophile nichtionische Verbindungen sind Polyetheralkohole, insbesondere Polyalkylenoxidpolyetheralkohole, vorzugsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n Tetradecanol, n-Hexadecanol, n-Octadecanol, Cyclohexanol, die isomeren Methylcyclohexanole, Hydroxy-methylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylen-oxideinheiten zu mindestens 70 mol-%, vorzugsweise zu mindestens 80 mol-% aus Ethylen-oxideinheiten bestehen.

Gemäß einer bevorzugten Ausführungsform der vorliegenden Erfindung werden hydrophilierte Polyisocyanate für die erfindungsgemäßen Beschichtungszusammensetzungen eingesetzt, welche aus dem Stand der Technik grundsätzlich bekannt und beispielsweise in EP-A 0 206 059, EP-A 0 540 985, EP-A 0 959 087 und EP-A1 287 052 beschrieben sind. Sie werden bislang hauptsächlich als Vernetzerkomponenten für wässrige Lack- und Klebstoffformulierungen verwendet.

Gemäß einer Ausführungsform der Erfindung ist das zur Herstellung des hydrophilen Polyisocyanats verwendete hydrophile Funktionalisierungsreagenz ein Polyetheralkohol.

Gemäß einer bevorzugten Ausführungsform der Erfindung wird zur Herstellung des hydrophilen Polyisocyanats als hydrophiles Funktionalisierungsreagenz ein Polyalkylenoxidpolyetheralkohol eingesetzt, insbesondere ein solcher, der unter Verwendung der oben genannten Monoalkohole des Molekulargewichtsbereiches 32 bis 150 als Startermolekül hergestellt wurde.

Gemäß einer besonders bevorzugten Ausführungsform der Erfindung ist das zur Herstellung des hydrophilen Polyisocyanats verwendete hydrophile Funktionalisierungsreagenz ein Polyetheralkohol, der ein reiner Polyethylenglycolmonomethyletheralkohol ist, insbesondere ein solcher, der im statistischen Mittel 5 bis 50, ganz besonders bevorzugt 5 bis 25 Ethylenoxideinheiten aufweist.

Das hydrophilierte Isocyanat hat vorzugsweise ein Molekulargewicht von höchstens 20000 g/mol, bevorzugt höchstens 10000 g/mol, bevorzugt höchstens 5000 g/mol besonders bevorzugt höchstens 3000 g/mol.

Geeignete hydrophilierte Isocyanate sind beispielhaft beschrieben in: Progress in Organic Coatings Volume 40, Issues 1-4, December 2000, Pages 99-109 Recent developments in aqueous two-component polyurethane (2K-PUR) coatings, Martin Melchiors', Michael Sonntag, Claus Kobusch, Eberhard Jürgens; D. Dieterich Prog. Org. Coat., 9 (1981), p. 281; W. Kubitza, Farbe Lack, 97 (1991), pp. 201-206; WO 2004022624 A1; US6426414B1, US07971491, US09300842, US08679112, DE-A-41 42 275, EP-A-206059.

Hydrophil modifizierte Polyisocyanate werden erhalten, indem ein Polyisocyanat mit einem Funktionalisierungsreagenz umgesetzt wird. Hierbei wird das Mengenverhältnis beider Reaktionspartner so gewählt, dass ein Überschuss von Isocyanatgruppen des Polyisocyanats gegenüber den mit Isocyanat reaktiven Gruppen des Funktionalisierungsreagenzes vorliegt. Auf diese Weise wird ein hydrophiliertes Isocyanat erhalten, dessen Moleküle im Durchschnitt noch wenigstens 1,0, stärker bevorzugt wenigstens 1,6 und am stärksten bevorzugt wenigstens 2,0 freie Isocyanatgruppen enthalten. Die Herstellung solcher bevorzugter, hydrophiler Polyisocyanate ist prinzipiell bekannt und beispielsweise in EP-A 0 206 059 und EP-A 0 540 985 beschrieben.

Unter Berücksichtigung der durchschnittlichen Isocyanatfunktionalität des hydrophilierten Isocyanats und seines Mengenanteils an der Isocyanatzusammensetzung A beträgt die durchschnittliche Funktionalität der aller in der Isocyanatzusammensetzung A enthaltenen- hydrophilierten und nicht hydrophilierten - Isocyanatmoleküle wenigstens 1,6, bevorzugt wenigstens 1,8 und stärker bevorzugt wenigstens 2,0.

Die Herstellung des oligomeren, hydrophil modifizierten Polyisocyanats durch partielle Umsetzung oligomerer Polyisocyanate mit mindestens einem gegenüber Isocyanatgruppen reaktiven hydrophilen Funktionalisierungsreagenz kann in Gegenwart aus dem Stand der Technik als geeignet bekannter Katalysatoren erfolgen, die die Reaktion des Funktionalisierungsreagenzes mit dem oligomeren Polyisocyanat fördern. Als besonders praxisgerecht hat es sich erwiesen, wenn als Katalysator einen Katalysator, ausgewählt aus Dibutylzinndilaurat, Zinkdioktoat und Zink-bis-(2-ethylhexanoat), eingesetzt wird. Bevorzugt wird der Katalysator, ausgewählt aus Zink-bis-(2-ethylhexanoat) und Katalysatoren, die die Bildungen von Oxazolidinonen und auch Isocyanuraten unterstützen sowie Mischungen davon.

Da die Reaktion von Polyisocyanaten mit gegenüber Isocyanat reaktiven Gruppen ein statistischer Prozess ist, reagieren bei einzelnen Polyisocyanatmolekülen alle Isocyanatgruppen mit dem Funktionalisierungsreagenz, während es andere Polyisocyanatmoleküle gibt, bei denen noch alle ursprünglich vorhandenen Isocyanatgruppen vorliegen. Deswegen wird eine erfindungsgemäße Polyisocyanatzusammensetzung A in der Praxis neben hydrophilierten Polyisocyanatmolekülen in den meisten Fällen auch unmodifizierte Polyisocyanatmoleküle enthalten.

Bei der Herstellung eines erfindungsgemäß geeigneten hydrophilierten Polyisocyanats beträgt das molare Verhältnis von freien Isocyanatgruppen im Polyisocyanat zu Isocyanatgruppen des Funktionalisierungsreagenzes bevorzugt wenigstens 1,0 : 0,3, stärker bevorzugt wenigstens 1,0 : 0,2, noch stärker bevorzugt wenigstens 1,0 : 0,15 und am stärksten bevorzugt wenigstens 1,0 : 0,1.

Gemäß einer besonderen Ausführungsform der Erfindung enthält die erfindungsgemäße Beschichtungszusammensetzung einen Anteil von hydrophil modifiziertem Isocyanat von höchstens 80 Gew.-%, insbesondere höchstens 70 Gew.-%, höchstens 60 Gew.-%, höchstens 50 Gew.-%, höchstens 40 Gew.-% oder höchstens 30 Gew.-%, jeweils bezogen auf das Gewicht des hydrophil modifizierten Isocyanats bezogen auf die gesamte Polyisocyanatkomponente A. Hierbei enthält die erfindungsgemäße Beschichtungszusammensetzung einen Anteil von hydrophil modifiziertem Isocyanat von wenigstens 5 Gew.-%, bevorzugt wenigstens 10 Gew.-%, stärker bevorzugt wenigstens 15 Gew.-% und am stärksten bevorzugt wenigstens 20 Gew.-%. Diese Ausführungsform beruht auf dem Umstand, dass auch ein Anteil des hydrophil modifizierten Polyisocyanats von weniger als 100 Gew.-% genügt, um einen nicht hydrophil modifizierten Anteil von Isocyanaten in Wasser erfindungsgemäß zu dispergieren.

Externe Emulgatoren zeichnen sich durch die Anwesenheit von hydrophilen und hydrophoben Endgruppen aus, wobei diese wiederum bevorzugt keine Isocyanatreaktivität aufweisen. Beispiele dafür sind AB und ABA Blockcopolymere aus Polyethylenoxid und Polybutylacrylat oder Laurylalkohol gestartete Polyether. Die beispielhaften Polyether weisen dabei an ihren Enden Methyl oder Ethylgruppen auf. Alternativ können anionische oder kationische Emulgatoren wie z.B. Alkylbenzolsulfonate (ABS): CₙH₂ₙ₊₁-C₆H₄-SO₃⁻Na⁺, zum Beispiel: Natriumdodecylbenzolsulfonat, sekundäre Alkylsulfonate (auch *Alkan*sulfonate, SAS): CₙH₂ₙ₊₁-SO₃⁻Na⁺, Fettalkoholsulfate (FAS): H₃C-(CH₂)ₙ-CH₂-O-SO₃⁻Na⁺ [n = 8-16], zum Beispiel: Natriumlaurylsulfat, Alkylethersulfate, z. B. Natriumdodecylpoly(oxyethylen)sulfat (SLES), Tauride eingesetzt werden. Beispiele für kationische Emulgatoren basieren auf quarternären Ammoniumverbindungen mit verschiedenen langkettigen Alkylresten wie Stearyl-, Palmityl-, Methyl-, Benzyl-, Butyl mit einem Chloridion als Gegenion.

In einer bevorzugten Ausführungsform ist die Isocyanatkomponente A ein Gemisch von hydrophilierten und nicht hydrophilierten Isocyanaten, wobei die hydrophilierten Isocyanate einen Anteil wenigstens 3 Gew.-% bevorzugt wenigstens 5 Gew.-% und ganz besonders bevorzugt wenigstens 10 Gew.-% ausmachen. Das Gemisch kann dadurch entstehen, dass bei der hydrophilen Modifizierung von Polyisocyanaten nicht alle eingesetzten Polyisocyanate mit dem Funktionalisierungsreagenz reagieren. Das Gemisch kann aber auch durch die aktive Zugabe nicht hydrohilisierter Polyisocyanate zu einer Zusammensetzung, die hydrophilisierte Polyisocyanate enthält oder daraus besteht, entstehen.

In jedem Fall weist die erfindungsgemäß erhältliche Isocyanatkomponente A enthaltend hydrophilierte Isocyanate eine bevorzugte Isocyanatkonzentration von 5 Gew.-% bis 40 Gew.-% Isocyanat bezogen auf das Gesamtgewicht der Isocyanatkomponente A sowie eine mittlere Isocyanatfunktionaliät von 1,6 bis 8,0 auf.

Es ist erfindungswesentlich, dass der Anteil hydrophilierter Polyisocyanate an der Isocyanatzusammensetzung A so groß ist, dass einer wasserfreien Isocyanatkomponente A genügend Wasser zugesetzt werden kann, um ihre Viskosität gegenüber einer ansonsten identischen, aber wasserfreien Isocyanatkomponente A um wenigstens 40 %, bevorzugt wenigstens 60 % und stärker bevorzugt wenigstens 80 % herabzusetzen, ohne dass es dabei im Rahmen der Topfzeit der Zusammensetzung zur Ausbildung einer Dispersion mit einer durchschnittlichen Teilchengröße von mehr als 5 µm oder zur Ausbildung getrennter kontinuierlicher Phasen kommt, die nicht einfach zu einer Lösung oder Dispersion mit einer durchschnittlichen Teilchengröße von höchstens 5 µm redispergiert werden kann. Besonders bevorzugt kommt es nach Abmischung der Isocyanatphase A mit der wässrigen Phase weder zu einer Ausbildung getrennter kontinuierlicher Phasen oder einer Dispersion mit einer durchschnittlichen Teilchengröße vom mehr als 5 µm bevor die Abmischung als Beschichtung auf einem Substrat aufgetragen wird. Für eine Anwendung der erfinderischen Zusammensetzungen bei Beschichtungen von Substraten wird unter einer einfachen Redispergierung eine Dispergierung mittels vor Ort verfügbarer üblicher Hilfsmittel wie einem einfachen Rühraggregat wie einem Laborrührer, einem Fassrührer oder einer Bohrmaschine mit aufgesetztem Rührkopf und gegebenenfalls sogar einem Rührstock verstanden.

### Verdünnung der Isocyanatkomponente A mit Wasser

Die Isocyanatkomponente A ist erfindungsgemäß mit Wasser verdünnt. Eine "Verdünnung" im Sinne der vorliegenden Erfindung unterscheidet sich von der "Umsetzung" einer Polyisocyanatkomponente dadurch, dass wenigstens 90 % der vor der Verdünnung vorliegenden freien Isocyanatgruppen der Polyisocyanatkomponente erhalten bleiben. Dies bedeutet, dass der Isocyanatkomponente so viel Wasser zugesetzt wurde, dass ihre Viskosität gegenüber einer ansonsten identischen, aber wasserfreien Isocyanatkomponente A herabgesetzt ist. Der Isocyanatkomponente A wird erfindungsgemäß so viel Wasser zugesetzt, dass ihre Viskosität gegenüber einer ansonsten identischen, aber wasserfreien Isocyanatkomponente A um wenigstens 40 %, bevorzugt wenigstens 60 % und stärker bevorzugt wenigstens 80 % herabgesetzt ist. Hierfür geeignete Konzentrationen der Isocyanatkomponente A in Wasser liegen zwischen 5 Gew.-% und 95 Gew.-%, bevorzugt zwischen 15 Gew.-% und 90 Gew.-%, stärker bevorzugt zwischen 20 Gew.-% und 85 Gew.-%, noch stärker bevorzugt zwischen 30 Gew.-% und 70 Gew.-% und am stärksten bevorzugt zwischen 30 Gew.-% und 60 Gew.-%. In einer ganz besonders bevorzugten Ausführungsform der vorliegenden Erfindung liegt die Konzentration der Isocyanatkomponente A in Wasser bei 5 bis 70 Gew.-% oder bei 80 bis 95 Gew.-%. Als "wasserfrei" wird eine Isocyanatkomponente A bezeichnet, die höchstens 0,1 Gew.-% Wasser enthält. Da Isocyanatgruppen über einen Zeitraum von Tagen oder Wochen mit anwesendem Wasser reagieren, ist bei jeder Isocyanatkomponente A, die aus einem seit ihrer Abfüllung nicht geöffneten Gefäß entnommen wurde, davon auszugehen, dass sie den vorgenannten Maximalgehalt aufweist.

Die erfindungsgemäße wasserverdünnte Polyisocyanatkomponente A wird vorzugsweise dadurch erhalten, dass die Polyisocyanatkomponente A in Wasser gelöst oder dispergiert wird, wobei weitere Verbindungen mit isocyanatreaktiven Gruppen (mit Ausnahme von Wasser) die mit dem Isocyanat in einer Zeit von höchstens 10 min eine feste Grenzschicht bilden, wie das zum Beispiel hochfunktionelle primäre Amine über die Ausbildung einer festen Polyharnstoff Grenzschicht zwischen der Wasserphase und der Isocyanatphase, höchstens in einer Menge zugegeben werden oder im Wasser bereits vorliegen, dass das molare Verhältnis von Isocyanatgruppen zu Aminogruppen wenigstens 30 : 1 beträgt. In einer bevorzugten Ausführungsform betrifft die vorliegende Erfindung eine Beschichtungszusammensetzung enthaltend eine mit Wasser verdünnte Polyisocyanatkomponente A, deren Verdünnung auf die in diesem Abschnitt definierte Weise erfolgt ist.

Wenn eine wasserlösliche isocyanatreaktive Komponente B wie unten in dieser Anmeldung definiert anwesend ist, so ist es bevorzugt, dass die Isocyanatkomponente A mit Wasser verdünnt wird, indem sie zu einer wässrigen Lösung der isocyanatreaktiven Komponente B zugegeben wird.

In einer bevorzugten Ausführungsform der vorliegenden Erfindung bildet die mit Wasser verdünnte Isocyanatkomponente A Dispersionen des Isocyanates in Wasser mit einer mittleren Teilchengröße von höchstens 5 µm, stärker bevorzugt höchstens 1 µm und noch stärker bevorzugt höchstens 500 nm Durchmesser. Ganz besonders bevorzugt liegt die mittlere Teilchengröße der gebildeten Dispersion bei höchstens 200 nm, ganz besonders bevorzugt ist die Dispersion optisch klar. In einer besonders bevorzugten Ausführungsform handelt es sich um eine Lösung des hydrophilierten Isocyanats in Wasser.

In einer bevorzugten Ausführungsform hat die erfindungsgemäße Beschichtungszusammensetzung enthaltend einen Feststoffgehalt von wenigstens 5 Gew.-%, bevorzugt wenigstens 20 Gew.-%, stärker bevorzugt wenigstens 30 Gew.-% und besonders bevorzugt wenigstens 40 Gew.-%.

### Ausschluss von polymeren Polyolen

Wie in der Einleitung ausgeführt haben wässrige Dispersionen polymerer Polyole den Nachteil, dass sie nur in einem begrenzten Temperaturbereich stabil sind. Deswegen ist es ein Vorteil der erfindungsgemäßen Beschichtungszusammensetzung, dass sie auch ohne die Verwendung polymerer Polyole gut verarbeitet werden kann und Beschichtungen mit guten anwendungstechnischen Eigenschaften ermöglicht.

Deswegen enthält die erfindungsgemäße Beschichtungszusammensetzung bezogen auf das Gewicht der Beschichtungszusammensetzung höchstens 10 Gew.-%, bevorzugt höchstens 5 Gew.-% stärker bevorzugt höchstens 2 Gew.-% polymere Polyole und am stärksten bevorzugt < 1 Gew.-% polymere Polyole. Ganz besonders bevorzugt ist die Beschichtungszusammensetzung frei von polymeren Polyolen.

Unter "polymerem Polyol" wird in dieser Anmeldung jede Verbindung verstanden, die im Durchschnitt wenigstens 1,2 Hydroxylgruppen besitzt und ein zahlenmittleres Molekulargewicht von wenigstens 2.000 g/mol, bevorzugt wenigstens 5.000 g/mol, stärker bevorzugt wenigstens 10.000 g/mol und am stärksten bevorzugt wenigstens 20.000 g/mol aufweist.

### Isocyanatreaktive Komponente B

In einer besonders bevorzugten Ausführungsform der vorliegenden Erfindung enthält die erfindungsgemäße Beschichtungszusammensetzung eine wasserlösliche isocyanatreaktive Komponente B.

Eine Komponente B ist "isocyanatreaktiv", wenn sie wenigstens eine funktionelle Gruppe enthält, die mit einer Isocyanatgruppe reagieren und als Ergebnis dieser Reaktion die isocyanatreaktive Komponente B mit der Komponente A enthaltend Polyisocyanat vernetzen kann. Bevorzugt enthält die Komponente B im Durchschnitt pro Molekül wenigstens zwei funktionelle Gruppen mit der der oben beschriebenen Reaktivität. Bevorzugte funktionelle Gruppen, die dieses Kriterium erfüllen, sind Hydroxyl-, Thiol- und Aminogruppen.

Die erfindungsgemäße Komponente B ist vorzugsweise wasserlöslich, wobei sie eine Wasserlöslichkeit von mindestens 50 g/l Wasser aufweist, bevorzugt mindestens 200 g/l Wasser und ganz besonders bevorzugt mindestens 500 g/l Wasser. Bevorzugt sind solche Komponenten B, deren wässrige Lösungen gegenüber herkömmliche wässrigen Dispersionen von Polyurethanen, Polyacrylaten, Polyestern, Polyepoxiden, Ethylenvinylacetat, Alkydharze oder Mischungen derselben, wie sie typischerweise in 2K Isocyanat vernetzenden Lackformulierungen eingesetzt werden, eine bessere Lagerstabilität aufweisen. Insbesondere bleiben wässrige Lösungen einer erfindungsgemäßen Komponente B mit einem Anteil der Komponente B von höchstens 60 Gew.-%, bevorzugt höchstens 50 Gew.-%, stärker bevorzugt höchstens 40 Gew.-%, noch stärker bevorzugt höchstens 30 Gew.-% und am stärksten bevorzugt höchstens 25 Gew.-% auch nach wiederholtem Abkühlen auf -5°C und folgendem Auftauen stabil, wobei Stabilität bedeutet, dass die Komponente B nicht mit Wasser unter Hydrolyse und Abspaltung von Bausteinen, insbesondere Alkoholen und Aminen, reagiert bzw. sich nach Einfrieren durch Aufrühren wieder redispergieren / homogenisieren / lösen lässt.

Die wasserlösliche isocyanatreaktive Komponente B hat ein zahlenmittleres Molekulargewicht von höchstens 1.800 g/mol, bevorzugt 1200 g/mol, stärker bevorzugt höchstens 800 g/mol und noch stärker bevorzugt höchstens 600 g/mol.

Als isocyanatreaktive Komponente B sind wasserlösliche oder leicht wasserdispergierbare isocyanatreaktive Bestandteile bevorzugt, vorzugsweise ausgewählt aus der Gruppe bestehend aus Alkoholen, Aminen und Thiolen. Besonders bevorzugt sind Methanol, Ethanol, n-Propanol, Isopropanol, n-Butanol, Isobutanol, sec-Butanol, die isomeren Pentanole, Hexanole, Octanole und Nonanole, Cyclohexanol, Ethylenglykol, Propylenglykol, die isomeren Butandiole, die isomeren Pentandiole, die isomeren Hexandiole, 2-Ethyl-1,3-hexandiol, Glycerin, Trimethylolethan, Trimethylolpropan, Cyclohexandiol, Pentandiol, Hexandiol, Zucker, Zuckerderivate, Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen-/Polypropylenglykole sowie deren Monoalkylether; Polytetrahydrofuranalkohole, Esteralkohole, wie z. B. Ethylenglykolmonoacetat, Propylen-glykolmonoacetat, Glycerinmono- und diacetat, Glycerinmonobutyrat oder 2,2,4-Trimethyl-1,3-pentandiol-monoisobutyrat; ungesättigte Alkohole wie z. B. Allylalkohol, Polyvinylalkohole, Hydroxyethyl(meth)acrylat, Hydroxypropyl(meth)acrylat, 1,1-Dimethyl-allylalkohol oder Oleinalkohol, araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische, höherfunktionelle Alkohole wie Ditrimethylolpropan, Pentaerythrit, Dipentaerythrit oder Sorbit. Amine wie Butylamin, Stearylamin, Ethanolamin, Dieethanolamin, Triethanolamin, Hydrazin, Ethylendiamin, Propylendiamin, Butandiamin 1,5 Petandiamin, 1,6-Hexandiamin, 1,8-Octandiamin, 1,9-Nonandiamin, 1,10-Decandiamin, 1,11-Undecandiamin, 1,12-Dodecandiamin, 2-Methyl-1,5-pentandiamin, 3-Methyl-1,5-pentandiamin, 2,2,4-Trimethyl-1,6-hexandiamin, 2,4,4-Trimethyl-1,6-hexandiamin, 2-Methyl-1,8-octandiamin und 5-Methyl-1,9-nonandiamin,), alicylclische Diamine Cyclohexandiamin, Methylcyclohexandiamin, Isophorondiamin, Norbornandimethyldiamin, Tricyclodecandimethylamin, Polyetheramine, Dieethylentriamin, Aminoethylpiparazine, Triethylentetramine, Tris (2-aminoethyl)amine, die Isomere des Methylendicyclohexyl-4,4'-diamin, wasserlösliche (di)/(tri)Thiole und Thioether.

Besonders bevorzugt enthält die Komponente B wenigstens eine Verbindung ausgewählt aus der Gruppe bestehend aus Glycerin, Monoethylenglykol, 1,2-Butandiol, 1,3-Butandiol, 1,4-Butandiol Trimethylolpropan, Neopentylglykol und Diethylenglykol. Noch stärker bevorzugt besteht die Komponente B aus wenigstens eine Verbindung ausgewählt aus der Gruppe bestehend aus Glycerin, Monoethylenglykol, 1,3-Butandiol, 1,4-Butandiol, Trimethylolpropan, Neopentylglykol und Diethylenglykol sowie gegebenenfalls Wasser.

Bevorzugt wird die Komponente B als wässrige Lösung in die Beschichtungszusammensetzung eingebracht. Die Verdünnung der isocyanatreaktiven Komponente B mit Wasser dient vorzugsweise dazu, die Viskosität der isocyanatreaktiven Komponente B soweit zu reduzieren, dass ihre Verarbeitung vereinfacht oder überhaupt erst ermöglicht wird.

In einer weiteren bevorzugten Ausführungsform wird die isocyanatreaktive Komponente B in die in Wasser vordispergierte Komponente A eingerührt.

In einer weiteren besonders bevorzugten Ausführungsform wird die Isocyanatkomponente A in die schon in Wasser gelöste bzw. vordispergierte Komponente B eingerührt.

In einer weiteren bevorzugten Ausführungsform werden beide Komponenten A und B unabhängig voneinander in Wasser vorgelöst bzw. Dispergiert und danach vereinigt.

### Trimerisierungskatalysator C

Die Aushärtung der erfindungsgemäßen Beschichtungszusammensetzung zu einer Beschichtung wird vorteilhaft durch einen geeigneten Katalysator unterstützt, der die Vernetzung von Isocyanatgruppen zu wenigstens einer Struktur ausgewählt aus der Gruppe bestehend aus Uretdion-, Isocyanurat-, Biuret-, Iminooxadiazindion- und Oxadiazintrionstrukturen bewirkt.

Deswegen enthält die erfindungsgemäße Beschichtungszusammensetzung in einer bevorzugten Ausführungsform der vorliegenden Erfindung wenigstens einen Trimerisierungskatalysator C. Geeignete Katalysatoren für das erfindungsgemäße Verfahren sind prinzipiell alle Verbindungen, die die Trimerisierung von Isocyanatgruppen zu Isocyanuratstrukturen beschleunigen. Vorzugsweise wird ein Trimerisierungskatalysator eingesetzt, der die Trimerisierungsreaktion unterhalb 25 °C, insbesondere unterhalb 30 °C, bevorzugt unterhalb 40 °C, nicht oder nicht wesentlich beschleunigt, sie oberhalb 60 °C, insbesondere oberhalb 70 °C aber signifikant beschleunigt. Nicht wesentlich beschleunigt bedeutet dabei, dass die Präsenz des Trimerisierungskatalysators in der Reaktionsmischung unterhalb 25 °C, insbesondere unterhalb 30 °C, bevorzugt unterhalb 40 °C, keinen wesentlichen Einfluss auf die Reaktionsgeschwindigkeit der ohnehin ablaufenden Reaktion hat bzw. die Topfzeit der so erhaltenen Zusammensetzungen ≥ 1min und bevorzugt ≥ 2 min beträgt. Die Topfzeit ist die Zeit, die bis zur Verdoppelung der Viskosität der Beschichtungszusammensetzung verstreicht.

Unter einer signifikanten Beschleunigung wird verstanden, dass sich die Präsenz des "thermolatenten" Katalysators oberhalb 60 °C, insbesondere oberhalb 70 °C in Reaktionsmischung deutlich auf die Reaktionsgeschwindigkeit der ohnehin ablaufenden Reaktion auswirkt.

Da die Isocyanuratbildung in Abhängigkeit vom verwendeten Katalysator häufig von Nebenreaktionen, beispielsweise der Dimerisierung zu Uretdionstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, soll im Rahmen der vorliegenden Erfindung der Begriff "Trimerisierung" synonym auch für diese zusätzlich ablaufenden Reaktionen stehen.

Gemäß einer besonderen Ausführungsform bedeutet Trimerisierung jedoch, dass vorwiegend Cyclotrimerisierungen von mindestens 50%, vorzugsweise mindestens 60%, besonders bevorzugt mindestens 70%, insbesondere mindestens 80%, der in der Isocyanatzusammensetzung A vorliegenden Isocyanatgruppen, zu Isocyanurat Struktureinheiten katalysiert werden. Nebenreaktionen, insbesondere solche zu Biuret-, Uretdion-, Allophanat-, Oxadiazintrion- und/oder Iminooxadiazindionstrukturen treten jedoch üblicherweise auf und können sogar gezielt genutzt werden, um z.B. den Tg-Wert der erhaltenen Beschichtung vorteilhaft zu beeinflussen.

Geeignete Katalysatoren für das erfindungsgemäße Verfahren sind beispielsweise einfache tertiäre Amine, wie z.B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren für das erfindungsgemäße Verfahren ebenfalls geeignet ist eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979*)* beschriebenen Art, wie z.B. Dibutylzinndichlorid, Diphenylzinndichlorid, Triphenylstannanol, Tributylzinnacetat, Tributylzinnoxid, Zinndioktoat, Dibutyl(dimethoxy)stannan und Tributylzinnimidazolat.

Weitere für das erfindungsgemäße Verfahren geeignete Trimerisierungskatalysatoren sind beispielsweise die aus der DE-A 1 667 309, EP-A 0 013 880 und EP-A 0 047 452 bekannten quaternären Ammoniumhydroxyde, wie z.B. Tetraethylammoniumhydroxid, Trimethylbenzylammoniumhydroxid, N,N-Dimethyl-N-dodecyl-N-(2-hydroxyäthyl)ammonium-hydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 37 65 oder EP-A 10 589 bekannten quaternären Hydroxyalkylammoniumhydroxide, wie z.B. N,N,N-Trimethyl-N-(2-hydroxyäthyl)-ammonium-hydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-NN,N-tributylammonium-2-ethylhexanoat, N,N-Dimethyl-N-ethyl-N-(4-methoxy-benzyl)ammonium-2-ethylhexanoat oder N,N,N-Tributyl-N-(4-methoxybenzyl)ammonium-pivalat, die aus der WO 2005/087828 bekannten tetrasubstituierten Ammonium-□-hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C₈-C₁₀-Alkylresten, N,N,N,N-Tetra-n-butylammoniumfluorid, N,N,N-Trimethyl-N-benzylammonium-fluorid, Tetramethylphosphonium-fluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyl-trimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholin-bicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere für das erfindungsgemäße Verfahren geeignete Trimerisierungskatalysatoren C) finden sich beispielsweise in J. H. Saunders und K. C. Frisch, Polyurethanes Chemistry and Technology, S. 94 ff (1962) und der dort zitierten Literatur.

Die Katalysatoren können sowohl einzeln als auch in Form beliebiger Gemische untereinander im erfindungsgemäßen Verfahren eingesetzt werden.

In einer bevorzugten Ausführungsform sind die eingesetzten Trimerisierungskatalysen in der wässrigen Phase löslich bzw. dispergiert und werden für die gewünschte Trimerisierungsreaktion erst nach Koaleszenz bzw. Filmbildung der hydrophilierten Isocyanat Dispersion zugänglich.

In einer anderen bevorzugten Ausführungsform sind die eingesetzten Trimerisierungskatalysatoren in der Isocyanat Phase löslich.

Bevorzugte Katalysatoren sind Metallverbindungen der vorstehend genannten Art, insbesondere Carboxylate und Alkoholate von Alkalimetallen, Erdalkalimetallen oder Zirkonium sowie organische Zinnverbindungen der genannten Art.

Besonders bevorzugte Trimerisierungskatalysatoren sind Natrium- und Kaliumsalze aliphatischer Carbonsäuren mit 2 bis 20 C-Atomen sowie aliphatisch substituierte Zinnverbindungen.

Ganz besonders bevorzugte Trimerisierungskatalysatoren für das erfindungsgemäße Verfahren sind Kaliumacetat, Zinndioktoat und/oder Tributylzinnoxid.

Gemäß einer Ausführungsform der Erfindung findet die katalytische Trimerisierung in Gegenwart eines Trimerisierungskatalysators statt, wobei der Trimerisierungskatalysator vorzugsweise mindestens ein Alkalimetall- oder Erdalkalimetallsalz umfasst.

Gemäß einer bevorzugten Ausführungsform der Erfindung umfasst der Trimerisierungskatalysator als Alkalimetallsalz Kaliumacetat und/oder einen Polyether, insbesondere ein Polyethylenglykol.

Beim erfindungsgemäßen Verfahren kommt der Trimerisierungskatalysator im Allgemeinen in einer auf die Menge der eingesetzten Beschichtungszusammensetzung bezogenen Konzentration von 0,0005 bis 5,0 Gew.-%, bevorzugt von 0,0010 bis 2,0 Gew.-% und besonders bevorzugt von 0,0015 bis 1,0 Gew.-% zum Einsatz.

Die beim erfindungsgemäßen Verfahren zum Einsatz gelangenden Trimerisierungskatalysatoren sind in den Mengen, die zur Initiierung der Oligomerisierungsreaktion benötigt werden, in der Regel ausreichend entweder in Isocyanaten oder in Wasser löslich bzw. dispergierbar. Die Zugabe des Katalysators zur Beschichtungszusammensetzung erfolgt daher vorzugsweise in Substanz in die Wasserphase oder in die Isocyanatphase.

Gegebenenfalls können die Katalysatoren zur Verbesserung ihrer Einarbeitbarkeit jedoch auch in einem geeigneten organischen Lösungsmittel gelöst eingesetzt werden. Der Verdünnungsgrad der Katalysatorlösungen kann dabei innerhalb eines sehr breiten Bereichs frei gewählt werden. Katalytisch wirksam sind solche Katalysatorlösungen üblicherweise ab einer Konzentration von etwa 0,01 Gew.-% bezogen auf das Gesamtgewicht an Katalysator und organischem Lösungsmittel.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäure-butylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, und ε-Caprolacton , aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern beim erfindungsgemäßen Verfahren Katalysatorlösungsmittel zum Einsatz kommen, werden bevorzugt Katalysatorlösungsmittel, die gegenüber Isocyanaten reaktive Gruppen tragen und in den Polyisocyanuratkunststoff eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmono-butylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylenglykolmonolaurat, Glycerinmono- und -diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Für Ausführungsformen, bei denen ein hoher Überschuss von Isocyanatgruppen gegenüber mit Isocyant reaktiven Gruppen eingesetzt wird, insbesondere bei molaren Überschüssen von wenigstens 3 : 1 werden vorzugsweise die nachfolgend aufgeführten Trimerisierungskatalysatoren eingesetzt.

### Geeignet sind Verbindungen gemäß Formel (I)

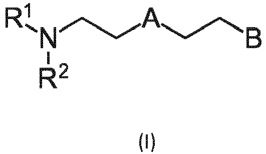

Wobei R¹ und R² unabhängig voneinander ausgewählt sind aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl;
A ausgewählt ist aus der Gruppe bestehend aus O, S und NR³, wobei R³ ausgewählt ist aus der Gruppe bestehend aus Wasserstoff, Methyl, Ethyl, Propyl, Isopropyl, Butyl und Isobutyl; und
B unabhängig von A ausgewählt ist aus der Gruppe bestehend aus OH, SH NHR⁴ und NH₂, wobei R⁴ ausgewählt ist aus der Gruppe bestehend aus Methy, Ethyl und Propyl.

In einer bevorzugten Ausführungsform der vorliegenden Erfindung ist A NR³, wobei R³ ausgewählt ist aus der Gruppe bestehend aus Wasserstoff, Methyl, Ethyl, Propyl, Isopropyl, Butyl und Isobutyl. Bevorzugt ist R³ Methyl oder Ethyl. Besonders bevorzugt ist R³ Methyl.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R4 ausgewählt aus der Gruppe bestehend aus Methyl, Ethyl und Propyl. _{Bevorzugt ist R}⁴ _{Methyl oder Ethyl. Besonders bevorzugt ist R}⁴ _{Methyl.}

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer weiteren bevorzugten Ausführungsform dieser Erfindung ist A Sauerstoff.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. _{Bevorzugt ist R}⁴ _{Methyl oder Ethyl. Besonders bevorzugt ist R}⁴ _{Methyl.}

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In noch einer weiteren bevorzugten Ausführungsform dieser Erfindung ist A Schwefel.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. _{Bevorzugt ist R}⁴ _{Methyl oder Ethyl. Besonders bevorzugt ist R}⁴ _{Methyl.}

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

Weiterhin geeignet sind Addukte einer Verbindung gemäß Formel (II) und einer Verbindung mit wenigstens einer Isocyanatgruppe 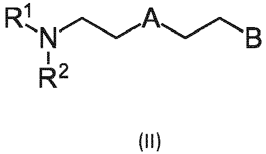
Wobei R¹ und R² unabhängig voneinander ausgewählt sind aus der Gruppe bestehend aus Wasserstoff, Methyl, Ethyl, Propyl, Isopropyl, Butyl und Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl;
A ausgewählt ist aus der Gruppe bestehend aus O, S und NR³, wobei R³ ausgewählt ist aus der Gruppe bestehend aus H, Methyl, Ethyl, Propyl, Isopropyl, Butyl und Isobutyl; und
B unabhängig von A ausgewählt ist aus der Gruppe bestehend aus OH, SH NHR⁴ und NH₂, wobei R⁴ ausgewählt ist aus der Gruppe bestehend aus Methyl, Ethyl und Propyl.

### Bevorzugte Varianten der Verbindung gemäß Formel (II)

In einer bevorzugten Ausführungsform der vorliegenden Erfindung ist A NR³, wobei R³ ausgewählt ist aus der Gruppe bestehend aus Wasserstoff, Methyl, Ethyl, Propyl, Isopropyl, Butyl und Isobutyl. Bevorzugt ist R³ Methyl oder Ethyl. Besonders bevorzugt ist R³ Methyl.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R4 ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer weiteren bevorzugten Ausführungsform dieser Erfindung ist A Sauerstoff.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In noch einer weiteren bevorzugten Ausführungsform dieser Erfindung ist A Schwefel.

In einer ersten Variante dieser Ausführungsform ist B OH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer zweiten Variante dieser Ausführungsform ist B SH und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

In einer dritten Variante dieser Ausführungsform ist B NHR⁴ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl. In dieser Variante ist R⁴ ausgewählt aus der Gruppe bestehend aus Methyl, Ethyl und Propyl. Bevorzugt ist R⁴ Methyl oder Ethyl. Besonders bevorzugt ist R⁴ Methyl.

In einer vierten Variante dieser Ausführungsform ist B NH₂ und R¹ und R² sind unabhängig voneinander ausgewählt aus der Gruppe bestehend aus Wasserstoff, Methyl, Ethyl, Propyl, Isopropyl, Butyl, Isobutyl, verzweigtem C5-Alkyl, unverzweigtem C5-Alkyl, verzweigtem C6-Alkyl, unverzweigtem C6-Alkyl, verzweigtem C7-Alkyl und unverzweigtem C7-Alkyl. Bevorzugt sind R¹ und R² unabhängig voneinander Methyl oder Ethyl. Besonders bevorzugt sind R¹ und R² Methyl.

Unter dem Oberbegriff "Addukt" werden Urethan-, Thiourethan- und Harnstoffaddukte einer Verbindung gemäß Formel (II) mit einer Verbindung mit wenigstens einer Isocyanatgruppe verstanden. Besonders bevorzugt ist ein Urethanaddukt. Die erfindungsgemäßen Addukte entstehen dadurch, dass ein Isocyanat mit der funktionellen Gruppe B der in Formel (II) definierten Verbindung reagiert. Wenn B eine Hydroxylgruppe ist, so entsteht ein Urethanaddukt. Wenn B eine Thiolgruppe ist, entsteht ein Thiourethanaddukt. Und wenn B NH₂ oder NHR⁴ ist, entsteht ein Harnstoffaddukt.

Für die Herstellung der erfindungsgemäßen Addukte kommen grundsätzlich alle Isocyanate in Betracht. Bevorzugt sind aber Isocyanate mit aliphatisch oder cycloaliphatisch gebundenen Isocyanatgruppen. Monomere und oliogomere Polyisocyanate sind gleichermaßen geeignet. Da ein geeignetes Isocyanat wenigstens eine Isocyanatgruppe aufweisen muss, sind Monoisocyanate ebenfalls zur Herstellung der erfindungsgemäßen Addukte geeignet. Weiterhin kann auch jedes Isocyanatgruppen tragende Präpolymer eingesetzt werden.

In einer bevorzugten Ausführungsform der vorliegenden Erfindung ist das zur Herstellung des Addukts verwendete Isocyanat ausgewählt aus der Gruppe bestehend aus BDI, HDI, PDI, IPDI, oligomerisiertem HDI, oligomerisiertem PDI und oligomerisiertem IPDI, Mischungen der vorgenannten Isocyanate und Umsetzungsprodukten der vorgenannten Isocyanate, soweit diese Umsetzungsprodukte noch mindestens eine freie Isocyanatgruppe enthalten.

Weiterhin geeignet sind beispielsweise die in der DE-A 3 240 613 als Katalysatoren beschriebenen Oktoate und Naphthenate von Mangan, Cobalt, Nickel, Kupfer, Zink, Zirkonium oder Cer oder deren Gemische mit Acetaten von Lithium, Natrium, Kalium, Calcium oder Barium, die aus DE-A 3 219 608 bekannten Natrium-, Kalium- und Zink-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium-, Kaliumbenzoat oder Zinkbenzoat, die aus der GB-PS 1 391 066 und GB-PS 1 386 399 bekannten Alkaliphenolate, wie z.B. Natrium-, Kalium oder Zinkphenolat, die aus der GB 809 809 bekannten Alkali- und Erdalkalioxide,-hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz. Weitere Metallkatalysatoren werden von Blank et al. in Progress in Organic Coatings, 1999, Vol. 35, Seiten 19-29 beschrieben.

Besonders bevorzugte Organozinkverbindungen sind Zinkoctoat, Zinknaphtenat, Zinktallat, Zinkcarboxylate (C₈ -C₁₄) und Zinkacetat.

Weiterhin sind fluoridhaltige Verbindungen, d.h. Verbindungen mit wenigstens einem Fluoridanion, besonders geeignet. Die Verbindung mit mindestens einem Fluoridanion wird bevorzugt ausgewählt aus mindestens einer Verbindung der Gruppe die gebildet wird aus Fluoriden, Difluoriden und Addukten aus mindestens einem Fluoridanion an Hydrogenfluorid (Hydrogenpolyfluoride). Hydrogen¬poly¬fluoride sind teilweise kommerziell erhältlich oder lassen sich in einfacher Weise und in beliebiger Stöchiometrie durch Abmischen entsprechender Fluoride mit der gewünschten HF-Menge herstellen. Im Gegensatz zum freien Fluorwasserstoff, der sich physiologisch unangenehm verhält, sind Hydro¬genpolyfluoride unproblematischer.

Bevorzugt enthält die erfindungsgemäße Zusammensetzung als Verbindung mit mindestens einem Fluoridanion mindestens eine Verbindung der allgemeinen Formel IV,

{M [n F⁻• m (HF)]} (IV)

wobei M für ein Äquivalent eines oder mehrerer Kationen steht, das eine Ladungszahl in Höhe von n als kationische Ladung trägt und die Elektroneutralität der Verbindung der Formel (IV) bewirkt,
n steht für eine Zahl von 1 bis 6, insbesondere von 1 bis 4, besonders bevorzugt von 1 bis 2,
m steht für eine Zahl von 0 bis 5. Dabei ist es erfindungsgemäß bevorzugt, wenn m gemäß Formel (IV) für eine Zahl von 0 bis 5 steht, besonders bevorzugt von 0 bis 2, ganz besonders bevorzugt ist m gemäß Formel (IV) 0 oder 1.

Besonders bevorzugt steht gemäß Formel (IV) n für die Zahl 1, und m steht für 0 oder 1.

Wiederum bevorzugt steht gemäß Formel (IV) n für 1 und m steht für 1.

M bedeutet ein Äquivalent eines oder mehrerer Kationen gleicher oder verschiedener Art, das die Elektroneutralität der Verbindung wahrt. Die Kationen dieses Äquivalents können gleich oder verschieden sein. Beispielsweise für n =1 und m = 1 und dem Kation Ca²⁺ ist das für die Elektroneutralität nötige Äquivalent M = 0.5 Ca²⁺.

Es sind erfindungsgemäß solche Zusammensetzungen bevorzugt, die dadurch gekennzeichnet sind, dass die Verbindung mit mindestens einem Fluoridanion gemäß Formel (IV) ein n-fach geladenes Kation als M enthält, und n=1 und m = 0 oder 1 ist.

Als Verbindung der Komponente B) können ein oder mehrere Metallfluoride mit beispielsweise Alkalimetallionen wie LiF, KF, NaF, RbF, CsF oder Erdalkalimetallkationen wie BeF₂, MgF₂, CaF₂, SrF₂, BaF₂ eingesetzt werden. Dies schließt auch Fluoride der Übergangsmetalle ein wie AgF, AgF2, ZnF₂, CuF₂, CuF₂·H₂O, NiF₂, SnF₂, InF₃, ScF₃, TiF₃, MnF₃, CoF₃, CrF₃, AuF₃, FeF₃, MnF₃, BiF₃, SbF₃, PdF₂, GeF₄, HfF₄, PdF₄, VF₃, SbF₅, TaF₅, WF₆, H₂ZrF₆, K₂NiF₆, K₂ZrF₆, K₂TiF₆. Auch Seltenerdfluoride wie SmF₃, LaF₃, YbF₃, YtF₃, CeF₃, EuF₃, CeF₄, ErF₃, LuF₃, NdF₃, NbF₅, HoF.

Auch können organische Fluoridverbindungen eingesetzt werden, wie Phenlymethansulfonylfluorid, Dimesitylborfluorid, N-(1,1-dimethyl-2-oxopropylthio)-N-methylcarbamoylfluorid ,Methansulfonylfluorid, Ethansulfonylfluorid, Perfluor-1-octansulfonylfluorid, 4-Amidinophenylmethansulfonylfluoridhydrochlorid, p-Toluolsulfonylfluorid, deren Derivate, oder Mischungen daraus. Dabei ist es wiederum bevorzugt, wenn organische Fluoridverbindungen der Formel (II) gehorchen und M für ein Äquivalent eines organischen Kations steht.

Als weitere erfindungsgemäße organische Kationen des Äquivalents M der Formel (IV) können Tetraalkylammonium- als auch Tetraalkylphosphoniumverbindungen verwendet werden, wobei die Alkylgruppen der Tetraalkylammonium- oder Tetralkylphosphoniumgruppen bevorzugt aus linearen oder verzweigten, gegebenenfalls cyclischen, Alkylengruppen, aufgebaut aus 2 bis 12 C-Atomen, bestehen. Es sind erfindungsgemäß solche Zusammensetzungen bevorzugt, die dadurch gekennzeichnet sind, dass die Verbindung mit mindestens einem Fluoridanion gemäß Formel (IV) ein n-fach geladenes Kation als M enthält, und n = 1 und m = 0 oder 1 ist. Besonders bevorzugt eignen sich Zusammensetzungen, in denen die Verbindung mit mindestens einem Fluoridanion eine Struktur der angegebenen allgemeinen Formel IV mit n = 1 und m = 0 aufweist und das Kation M ausgewählt wird aus Alkalimetallionen, Tetraalkylammonium- oder Tetraalkylphosphoniumionen oder Mischungen daraus.

Bevorzugt sind solche Systeme der allgemeinen Formel IV, die als kationische Bestandteile Kalium-, Tetra-alkyl¬ammonium- oder Tetraalkylphosphoniumionen sowie deren Mischungen enthalten. Bevorzugte Anionen sind solche der allgemeinen Struktur IV mit n = 1 und m= 0 oder 1 und deren Mischungen, wiederum bevorzugt sind Strukturen der Formel IV mit n = 1 und m = 1.

Es kann als Katalysator bevorzugt mindestens eine Verbindung der Formel (IV-1) eingesetzt werden:

R₄E⁺ [F⁻. m (HF)] (IV-1),

wobei

E für N oder P steht, R für gleiche oder verschiedene, gegebenenfalls verzweigte, gegebenenfalls cyclische, gegebenenfalls substituierte (O, N, Halogen) aliphatische, araliphatische, sowie aromatische Reste mit jeweils 1 bis 25 C-Atomen steht, oder jeweils unabhängig voneinander zwei Reste R gemeinsam mit dem quartären Stickstoffatom oder dem quartären Phosphoratom einen 5-gliederigen oder 6-gliederigen Ring bilden, und für m gilt: m ist eine Zahl zwischen 0 und 5, besonders bevorzugt steht m für 0 oder 1, ganz besonders bevorzugt steht m für 1. Bilden jeweils zwei Reste R paarweise gemeinsam mit dem quartären Stickstoffatom oder dem quartären Phosphoratom einen 5-gliedrigen oder 6-gliedrigen Ring, so wird eine kationische Spiroverbindung erhalten. Bevorzugt eignen sich erfindungsgemäß entsprechende Spirokationen, wie sie in der Patentanmeldung WO 2015/124504 A1 (siehe dort Formel (I)), insbesondere in den Ansprüchen 1 und 2 dieser Druckschrift, beschrieben sind. Auf diese Druckschrift wird ausdrücklich und vollinhaltlich Bezug genommen.

Bevorzugt werden als solche Katalysatoren Verbindungen der Formel (IV-1) eingesetzt, wobei E für N oder P steht, R für gleiche oder verschiedene, gegebenenfalls verzweigte, gegebenenfalls substituierte (O, N, Halogen) (cyclo)aliphatische sowie araliphatische Reste mit jeweils 1 bis 20 C-Atomen steht und m eine Zahl zwischen 0 und 5 ist, besonders bevorzugt steht m für 0 oder 1, ganz besonders bevorzugt steht m für 1.

Ein Beispiel für letztere sind Benzyltrimethylammoniumhydrogenpolyfluoride der Formel (IV-2):

C₆H₅CH₂(CH₃)₃N⁺[F^{-.} m (HF)] (II-2),

sowie Tetraalkylammoniumhydrogenpolyfluoride der Formel (II-3) und Tetraalkylphosphonium-hydrogenpolyfluoride der Formel (IV-4):

R₄N⁺[F^{-.} m (HF)] (IV-3),

R₄P⁺[F^{-.} m (HF)] (IV-4),

wobei R für gleiche oder verschiedene, gegebenenfalls verzweigte, (cyclo)aliphatische Reste mit jeweils 1 bis 20 C-Atomen steht oder jeweils unabhängig voneinander zwei Reste R gemeinsam mit dem quartären Stickstoffatom oder dem quartären Phosphoratom einen 5-gliederigen oder 6-gliederigen Ring bilden, und m für eine Zahl zwischen 0 und 5 steht, besonders bevorzugt steht m für 0 oder 1, ganz besonders bevorzugt steht m für 1. Bilden jeweils zwei Reste R paarweise gemeinsam mit dem quartären Stickstoffatom oder dem quartären Phosphoratom einen 5-gliedrigen oder 6-gliedrigen Ring, so wird eine kationische Spiroverbindung erhalten. Bevorzugt eignen sich erfindungsgemäß entsprechende Spirokationen, wie sie in der Formel (I) der Patentanmeldung WO 2015/124504 A1, insbesondere in den Ansprüchen 1 und 2 dieser Druckschrift, beschrieben sind. Auf diese Druckschrift wird ausdrücklich und vollinhaltlich Bezug genommen.

Besonders bevorzugt werden als Katalysator Verbindungen der Formel (IV-5) und/oder der Formel (IV-6) eingesetzt:

R₄N⁺[F⁻ m (HF)] (IV-5),

R₄P⁺[F⁻ m (HF)] (IV-6),

wobei

R für gleiche oder verschiedene, gegebenenfalls verzweigte, (cyclo)aliphatische Reste mit jeweils 1 bis 20 C-Atomen steht oder jeweils unabhängig voneinander zwei Reste R gemeinsam mit dem quartären Stickstoffatom oder dem quartären Phosphoratom einen 5-gliederigen oder 6-gliederigen Ring bilden und m für eine Zahl zwischen 0 und 5 steht, bevorzugt zwischen 0 und 2, ganz besonders bevorzugt 0 oder 1 ist. Bilden jeweils zwei Reste R paarweise gemeinsam mit dem quartären Stickstoffatom oder dem quartären Phosphoratom einen 5-gliedrigen oder 6-gliedrigen Ring, so wird eine Spiroverbindung als Kation erhalten. Bevorzugt eignen sich erfindungsgemäß entsprechende Spiroverbindungen als Kationen, wie sie in der Patentanmeldung WO 2015/124504 A1 beschrieben sind, auf die ausdrücklich und vollinhaltlich Bezug genommen wird.

Bevorzugte Verbindungen mit mindestens einem Fluoridanion werden ausgewählt aus mindestens einer Verbindung der Gruppe, die gebildet wird aus Tetrabutylammoniumfluorid, Tetrabutylphosphoniumfluorid, Tetraethylammoniumfluorid, Tetraethylphosphoniumfluorid, Piperidinium-1-spiro-1'-pyrrolidiniumfluorid, Tetramethylammoniumfluorid, Kaliumhydrogendifluorid, Tetrabutylammoniumhydrogendifluorid, Tetrabutylphosphonium-hydrogendifluorid, Tetraethylammoniumhydrogendifluorid, Tetraethylphosphonium-hydrogendifluorid, Piperidinium-1-spiro-1'-pyrrolidiniumhydrogendifluorid, Tetramethyl-ammoniumhydrogendifluorid.

Es kann eine einzelne Verbindung mit mindestens einem Fluoridanion oder in gewissen Fällen auch eine Mischung verschiedener dieser Verbindungen eingesetzt werden.

Um die Löslichkeit der Fluoridionen oder auch deren Mischung zu erhöhen, können auch Chelatliganden eingesetzt werden. Dazu gehören Acetylaceton, Iminodiacetat, Nitrilotriacetat, Bis(salicyliden)ethylendiamin, Ethylendiamintriacetat, Ethylendiamintetraacetat, Diethylentriaminpentacetat, 1,4,7,10-Tetraazacyclodedecan-1,4,7,10-tetraacetat, Oxalat, Tartrat, Citrat, Dimethylglyoxim, 8-Hydroxychinolin, Kronenether wie z.B. 18-Krone-6, Dimercaptobernsteinesäure, 1,2-Bis(diphenylphosphino)ethan.

Die Verbindung mit mindestens einem Fluoridanion (oder Mischungen mehrere dieser Verbindungen) kann auch mit einem Lösungsmittel verdünnt werden. Selbstverständlich ist es möglich oder in gewissen Fällen sogar bevorzugt, Mischungen verschiedener Verbindungen mit mindestens einem Fluoridanion einzusetzen. Beispiele solcher Lösungsmittel sind 2-Ethylhexanol, Aceton, 2-Butanon, Methylisobutylketon, Butylacetat, Ethylacetat, 1-Methoxy-2-propylacetat (MPA), 3-Methoxy-1-butylacetat, Propylen-n-Butylether, Toluol, Methylethylketon, Xylol, 1,4-Dioxan, Diacetonalkohol, Methanol, Ethanol, Isopropanol, Ethylenglykol, Diethylenglykol, N-Methylpyrrolidon, Dimethylacetamid, Dimethylformamid, Dimethylsulfoxid, Methylethylketon, Solvent Naphta (Kohlenwasserstoffgemisch) oder beliebige Gemische solcher Lösungsmittel.

### Urethanisierungskatalysator D

In einer bevorzugten Ausführungsform der vorliegenden Erfindung enthält die erfindungsgemäße Beschichtungszusammensetzung einen Urethanisierungskatalysator D gegebenenfalls zusätzlich zu einem Trimerisierungskatalysator. Dies ist insbesondere bevorzugt, wenn die erfindungsgemäße Beschichtungszusammensetzung zusätzlich eine isocyanatreaktive Komponente B wie oben definiert enthält. Unter "Urethanisierungskatalysator" wird in dieser Anmeldung jede Verbindung verstanden, die die Reaktion von Hydroxyl- und Isocyanatgruppen zu Urethangruppen beschleunigen kann. Da Urethanisierungskatalysatoren typischerweise auch eine Harnstoffbildung katalysieren, werden im weiteren Verlauf auch Katalysatoren, die die Bildung von Harnstoffgruppen aus Isocyanat- und Aminogruppen beschleunigen, synonym als Urethanisierungskatalysatoren bezeichnet.

Da die Urethanisierungsreaktion bzw. die Harnstoffbildung in Abhängigkeit vom verwendeten Katalysator häufig von Nebenreaktionen, beispielsweise der Allophanatbildung oder Biuretbildung begleitet wird, soll im Rahmen der vorliegenden Erfindung der Begriff "Urethanisierung" synonym auch für diese zusätzlich ablaufenden Reaktionen stehen.

Gemäß einer besonderen Ausführungsform bedeutet Urethanisierung jedoch, dass vorwiegend mindestens 20%, vorzugsweise mindestens 50%, besonders bevorzugt mindestens 70%, insbesondere mindestens 80%, der in der Reaktionsmischung vorliegenden Isocyanatgruppen, zu Urethangruppen umgesetzt werden. Nebenreaktionen, insbesondere solche zu Allophanat-, und/oder Biuret und oder Harnstoff treten jedoch üblicherweise auf und können sogar gezielt genutzt werden, um z.B. den Tg-Wert der erhaltenen Beschichtung vorteilhaft zu beeinflussen.

Vorzugsweise wird ein Urethanisierungskatalysator eingesetzt, der die Urethanisierungsreaktion unterhalb von 25 °C, insbesondere unterhalb 30 °C, bevorzugt unterhalb 40 °C, nicht oder nicht wesentlich beschleunigt, sie oberhalb 60 °C, insbesondere oberhalb 70 °C aber signifikant beschleunigt. Ein solcher Katalysator wird als "thermolatent" bezeichnet. Nicht wesentlich beschleunigt bedeutet dabei, dass die Präsenz des Urethanisierungskatalysators in der Reaktionsmischung unterhalb 25 °C, insbesondere unterhalb 30 °C, bevorzugt unterhalb 40 °C, keinen wesentlichen Einfluss auf die Reaktionsgeschwindigkeit der ohnehin ablaufenden Reaktion hat. Unter einer signifikanten Beschleunigung wird verstanden, dass sich die Präsenz des "thermolatenten" Katalysators oberhalb 60 °C, insbesondere oberhalb 70 °C in Reaktionsmischung deutlich auf die Reaktionsgeschwindigkeit der ohnehin ablaufenden Reaktion auswirkt.

Grundsätzlich sind alle zur Herstellung von Polyurethanen bekannte Katalysatoren als Urethanisierungskatalysator D verwendbar. Beispielhaft genannt seien Triethylamin, 1,4-Diazabicyclo-[2,2,2]-octan, Dibutylzinnoxid, Zinndioktoat, Dibutylzinndilaurat, Zinn-bis-(2-ethylhexanoat), Zinkdioktoat, Zink-bis-(2-ethylhexanoat) oder andere metallorganische Verbindungen. Als besonders praxisgerecht hat es sich erwiesen, wenn als Katalysator ein Katalysator ausgewählt aus der Gruppe bestehend aus Dibutylzinndilaurat, Zinkdioktoat Zink-bis-(2-ethylhexanoat) und Lithiummolybdat eingesetzt wird. Bevorzugt wird der Katalysator ausgewählt aus der Gruppe bestehend aus Zink-bis-(2-ethylhexanoat) und Katalysatoren, die die Bildungen von Oxazolidinonen und auch Isocyanuraten unterstützen, sowie Mischungen davon. Die Katalysatoren können ferner, je nach Zusammensetzung der Reaktionsmischung, Auswahl des Funktionalisierungsreagenzes und Reaktionsbedingungen, auch aus den untenstehend für die Katalysatoren aufgezählten Verbindungen in den entsprechenden Mengen und gegebenenfalls unter Verwendung der unten angegebenen Katalysatorlösungsmittel ausgewählt sein.

Gemäß einer besonderen Ausführungsform werden latente Urethanisierungskatalysatoren eingesetzt die eine Urethanisierungsreaktion gezielt erst bei höheren Temperaturen katalysieren damit eine Trocknung der Beschichtungszusammensetzung unterhalb der Aktivierungstemperatur des latenten Katalysators ermöglichen. Dadurch werden besonders homogene und hochwertige Lackfilme erhalten.

In einer bevorzugten Ausführungsform werden latente Urethanisierungskatalysatoren in die Komponente enthaltend hydrophilierte Isocyanate dosiert.

Ein erfindungsgemäßer latenter Urethanisierungskatalysator enthält eine oder mehrere zyklische Zinnverbindungen der Formel F-I, F-II und/oder F-III: 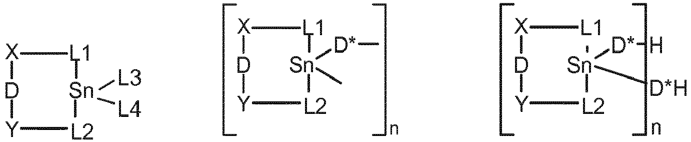 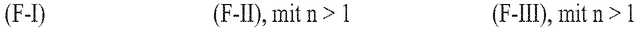 wobei gilt:
D steht für -O-, -S- oder -N(R1)-
   wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 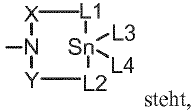 oder R1 und L3 zusammen für -Z-L5- stehen;
D^{∗} steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-
Arylenresten der Formeln 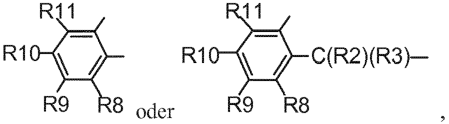 wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
   wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15,-OC(=S)R16, -OS(=O)₂OR17, -OS(=O)₂R18 oder -NR19R20, oder L3 und L4 zusammen stehen für-L1-X-D-Y-L2-,
   wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Hetero-atome aus der Reihe Sauerstoff, Schwefel, Stickstoff enthalten können, oder für Wasserstoff stehen.

Die Zinnverbindungen der Formeln F-I, F-II und F-III sind thermisch labil. Unterhalb einer bestimmten Temperatur weisen sie keine technisch sinnvolle katalytische Aktivität für die Reaktion von NCO-Gruppen mit funktionellen Gruppen, welche Zerewitinoff-aktive H-Atome tragen, auf. Insbesondere seien hierbei Urethanisierungen und Harnstoffbildungen zu nennen. Oberhalb einer bestimmten Temperatur steigt jedoch die katalytische Aktivität stark an. Ohne auf eine Theorie beschränkt zu sein wird angenommen, dass dann die Liganden Sn-Zentrum ganz oder teilweise dissoziieren und daher das Sn-Zentrum als Katalysator zur Verfügung steht. Insofern lässt sich von thermisch latenten Katalysatoren sprechen. Dadurch, dass die im Aufbaumaterial vorliegenden NCO-Gruppen unterhalb dieser Temperatur nicht abreagieren, kann das Aufbaumaterial auch leicht wiederverwertet werden.

In den Fällen, in denen die Zinnverbindungen der Formeln F-I, F-II und/oder F-III Liganden mit freien OH- und/oder NH-Resten aufweisen, kann der Katalysator bei der Polyisocyanat-Polyadditionsreaktion in das Produkt eingebaut werden. Besonderer Vorteil dieser einbaubaren Katalysatoren ist ihr stark reduziertes Fogging-Verhalten.

Die verschiedenen Herstellungsmethoden für die erfindungsgemäß zu verwendenden Zinn(IV)-Verbindungen bzw. ihrer Zinn(II)-Precursoren sind u.a. beschrieben in: J. Organomet. Chem. 2009 694 3184-3189, Chem. Heterocycl. Comp. 2007 43 813-834, Indian J. Chem. 1967 5 643-645 sowie in darin angeführter Literatur.

Der Gehalt der Zinnverbindungen der Formeln F-I, F-II und/oder F-III in der hydrophilierte Isocyanate enthaltenden IsocyanatPhase kann vom Typ der Isocyanate abhängig gemacht werden. So kann, wenn an ein aromatisches C-Atom gebundene NCO-Gruppen dominieren, der Gehalt ≤ 100 ppm, bezogen auf das Gesamtgewicht des Aufbaumaterials, betragen. Wenn an ein aliphatisches C-Atom gebundene NCO-Gruppen dominieren, der Gehalt ≤ 3000 ppm, bezogen auf das Gesamtgewicht des der IsocyanatPhase enthaltend hydrophilierte Isocyanate, betragen.

In einer weiteren bevorzugten Ausführungsform werden als zyklische Zinnverbindung eine oder mehrere der nachfolgenden Verbindungen eingesetzt:
4,12-Di-n-butyl-1,7,9,15-tetraoxa-4,12-diaza-8-stannaspiro[7.7]pentadecan,
4,12-Di-n-butyl-2,6,10,14-tetramethyl-1,7,9,15-tetraoxa-4,12-diaza-8-stannaspiro[7.7]pentadecan,
2,4,6,10,12,14-Hexamethyl-1,7,9,15-tetraoxa-4,12-diaza-8-stannaspiro [7.7]pentadecan,
4,12-Di-n-octyl-2,6,10,14-tetramethyl-1,7,9,15-tetraoxa-4,12-diaza-8-stannaspiro [7.7]pentadecan,
4,12-Di-n-octyl-1,7,9,15-tetraoxa-4,12-diaza-8-stannaspiro[7.7]pentadecan,
4,12-Dimethyl-1,7,9,15-tetraoxa-4,12-diaza-8-stannaspiro[7.7]pentadecan,
1,1-Dichloro-5-methyl-5-aza-2,8-dioxa-1-stannacyclooctan,
1,1-Diisopropyl-5-methyl-5-aza-2,8-dioxa-1-stannacyclooctan,
1,1-Dibenzoyl-3,3,7,7-tetramethyl 5-n-octyl-5-aza-2,8-dioxa-1-stannacyclooctan,
1,1-Dibenzoyl- 5-n-octyl-5-aza-2,8-dioxa-1 -stannacyclooctan,
1,1-Bis(p-dodecylphenylsulfonyl)- 5-n-octyl-5-aza-2,8-dioxa-1-stannacyclooctan,
2-Benzoyloxy-6-octyl-4,8-dioxo-1,3,6,2-dioxazastannocan-2-ylbenzoat
oder Mischungen davon.

Weitere für das erfindungsgemäße Verfahren geeignete Urethanisierungs und Trimerisierungskatalysatoren finden sich beispielsweise in J. H. Saunders und K. C. Frisch, Polyurethanes Chemistry and Technology Teil 1 und 2 und der dort zitierten Literatur.

Die Katalysatoren können sowohl einzeln als auch in Form beliebiger Gemische untereinander im erfindungsgemäßen Verfahren eingesetzt werden.

In einer bevorzugten Ausführungsform sind die eingesetzten Urethanisierungskatalysatoren in der wässrigen Phase löslich.

In einer anderen bevorzugten Ausführungsform sind die eingesetzten Urethanisierungskatalysatoren in der Isocyanatphase löslich.

Die beim erfindungsgemäßen Verfahren zum Einsatz gelangenden Urethanisierungskatalysatoren sind in den Mengen, die zur Initiierung der Vernetzung benötigt werden, in der Regel ausreichend entweder in der Isocyanatkomponente A oder in Wasser oder in der Isocyanat reaktiven Komponente B löslich. Die Zugabe des Katalysators zur Beschichtungszusammensetzung erfolgt daher vorzugsweise in Substanz.

Gegebenenfalls können die Katalysatoren zur Verbesserung ihrer Einarbeitbarkeit jedoch auch in einem geeigneten organischen Lösungsmittel gelöst eingesetzt werden. Der Verdünnungsgrad der Katalysatorlösungen kann dabei innerhalb eines sehr breiten Bereichs frei gewählt werden. Katalytisch wirksam sind solche Katalysatorlösungen üblicherweise ab einer Konzentration von etwa 0,01 Gew.-% bezogen auf das Gesamtgewicht an Katalysator und organischem Lösungsmittel.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäure-butylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie ß-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern beim erfindungsgemäßen Verfahren Katalysatorlösungsmittel zum Einsatz kommen, werden in einer Ausführungsform bevorzugt Katalysatorlösungsmittel, die gegenüber Isocyanaten reaktive Gruppen tragen und in den Polyisocyanuratkunststoff eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmono-butylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

### Hilfsstoffe

Die mit der erfindungsgemäßen Beschichtungszusammensetzung erhältlichen Beschichtungen zeichnen sich bereits als solche, d. h. ohne Zusatz entsprechender Hilfs-und Zusatzmittel durch eine sehr gute Lichtbeständigkeit aus. Dennoch können bei ihrer Herstellung gegebenenfalls übliche Hilfs-und Zusatzmittel, wie beispielsweise übliche Füllstoffe, UV-Stabilisatoren, Antioxidantien, Formtrennmittel, Wasserfänger, Slipadditive, Entschäumer, Verlaufsmittel, Rheologieadditive, Flammschutzmittel und/oder Pigmente, mitverwendet werden. Diese Hilfs- und Zusatzmittel, ausgenommen Füllstoffe und Flammschutzmittel, liegen üblicherweise in einer Menge von höchstens 10 Gew.-%, vorzugsweise höchstens 5 Gew.-%, besonders bevorzugt höchstens 3 Gew.-%, bezogen auf den Festkörperanteil der erfindungsgemäßen Lackzusammensetzung vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf den Festkörperanteil der erfindungsgemäßen Lackzusammensetzung vor.

### Vorteile der erfindungsgemäßen Beschichtungszusammensetzung

Die erfindungsgemäßen Beschichtungsmittel sind Lösungsmittelarm bzw. frei von Lösemitteln und haben dadurch erhebliche ökologische Vorteile. Bereits die Verwendung einer Isocyanatkomponente A ohne zusätzliche isocyanatreaktive Komponente B ermöglicht die Herstellung von Beschichtungen mit guten anwendungstechnischen Eigenschaften. Es werden insbesondere transparente, blasenfreie Lacke mit hoher Härte nach König von wenigstens 100 s, bevorzugt wenigstens 120 s und besonders bevorzugt wenigstens 150 s erhalten.

Konventionelle in Wasser dispergierte polymere Polyole müssen in einem relativ engen Temperaturbereich gelagert werden, um ihre Stabilität zu erhalten. Die erfindungsgemäße wasserlösliche isocyanatreaktive Komponente B hingegen bleibt auch bei Temperaturen unter dem Gefrierpunkt stabil gelöst. Somit offenbart die vorliegende Anmeldung wasserbasierte (und somit lösungsmittelarme) Beschichtungszusammensetzungen, die gegenüber konventionellen wasserbasierten und isocyanathaltigen Beschichtungszusammensetzungen eine deutlich erhöhte Temperaturstabilität aufweisen. Dies vereinfacht die Anwendung und erweitert das Spektrum möglicher Einsatzfelder erheblich.

### Verwendung

In einer weiteren Ausführungsform betrifft die vorliegende Erfindung die Verwendung der erfindungsgemäßen Beschichtungszusammensetzung zur Beschichtung einer Oberfläche.

Hierbei wird die erfindungsgemäße Beschichtungszusammensetzung auf eine Oberfläche aufgetragen und anschließend ausgehärtet.

Das Auftragen auf eine Oberfläche kann mit allen dem Fachmann bekannten geeigneten Verfahren erfolgen. Dies sind vorzugsweise Spritzen, Streichen, Tauchen, Fluten, oder Drucken. Die erfindungsgemäße Beschichtungszusammensetzung kann auch mit Hilfe von Pinseln, Walzen oder Rakeln in einer oder mehrerer Schichten auf beliebige Substrate aufgetragen werden. Bevorzugte Substrate sind Metall, Holz, Glas, Stein, keramische Materialien, Beton, harte und flexible Kunststoffe, Textilien, Leder und Papier.

Die Aushärtung erfolgt vorzugsweise bei Temperaturen zwischen 10 °C und 200 °C. Soweit die erfindungsgemäße Beschichtungszusammensetzung Katalysatoren enthält, erfolgt die Härtung vorzugsweise in einem Temperaturbereich, bei dem der oder die Katalysatoren aktiv sind. Vorzugsweise wird die Aushärtung solange durchgeführt, bis die Trimerisierungsreaktion und/oder Urethanisierungsreaktion zu Polyisocyanuratstrukturen oder Urethan- bzw. Harnstoffstrukturen weitestgehend abgeschlossen ist. Als "weitestgehend abgeschlossen" kann im Sinne der vorliegenden Erfindung ein Restisocyanatgehalt von < 20 % bevorzugt < 10 %, bevorzugt < 5% angesehen werden, bzw. wenn mindestens 80 %, vorzugsweise mindestens 90 %, besonders bevorzugt mindestens 95 % der ursprünglich in der erfindungsgemäßen Beschichtungszusammensetzung vorhandenen freien Isocyanatgruppen abreagiert haben. Der Prozentsatz an noch vorhandenen Isocyanat-Gruppen kann durch einen Vergleich des Gehalts an Isocyanat-Gruppen in Gew.-% in der ursprünglichen Beschichtungszusammensetzung mit dem Gehalt an Isocyanat-Gruppen in Gew.-% im Reaktionsprodukt, beispielsweise durch Vergleich der Intensität der Isocyanatbande bei ca. 2270 cm⁻¹ mittels IR-Spektroskopie, bestimmt werden.

### Verfahren

In einer weiteren Ausführungsform betrifft die vorliegende Erfindung ein Verfahren zur Herstellung einer Beschichtung enthaltend die Schritte
a) Verdünnen einer Isocyanatkomponente A, wenigstens ein hydrophiliertes Polyisocyanat enthält, mit Wasser, so dass die Isocyanatgruppen des hydrophilierten Isocyanats in direktem Kontakt mit Wasser stehen;
b) Auftragen der in Verfahrensschritt a) erhaltenen Beschichtungszusammensetzung auf eine Oberfläche; und
c) Aushärten der Beschichtungszusammensetzung, mit der Maßgabe dass die aushärtende Beschichtungszusammensetzung einen Gehalt an polymeren Polyolen von höchstens 10 Gew.-% aufweist.

Alle weiter oben gegebenen Definitionen der Isocanatkomponente A, des hydrophilierten Polyisocyanats sowie des Mischungsverhältnisses von Isocyanat und Wasser gelten auch für diese Ausführungsform. Das Gleiche gilt für den Anteil polymer Polyole in Verfahrensschritt c).

Die Verdünnung der Polyisocyantkomponente A mit Wasser kann nach allen im Stand der Technik gebräuchlichen Verfahren erfolgen. Eine "Verdünnung" im Sinne der vorliegenden Erfindung unterscheidet sich von der "Umsetzung" einer Polyisocyanatkomponente dadurch, dass wenigstens 90 % der vor der Verdünnung vorliegenden freien Isocyanatgruppen der Polyisocyanatkomponente erhalten bleiben. Da unter geeigneten Reaktionsbedingungen Isocyanatgruppen mit Wasser zu Aminogruppen reagieren können, erfolgt die Verdünnung der Isocyanatkomponente A mit Wasser höchstens 12 Stunden, bevorzugt höchstens 6 Stunden, stärker bevorzugt höchstens 4 Stunden vor dem Auftrag der Beschichtungszusammensetzung auf eine Oberfläche. Bei der Lösung oder Dispergierung der Polyisocyanatkomponente A in Wasser werden weitere Verbindungen mit isocyanatreaktiven Gruppen (mit Ausnahme von Wasser) die mit dem Isocyanat in einer Zeit von höchstens 10 min eine feste Grenzschicht bilden, wie das zum Beispiel hochfunktionelle primäre Amine über die Ausbildung einer festen Polyharnstoff Grenzschicht zwischen der Wasserphase und der Isocyanatphase, höchstens in einer Menge zugegeben, dass das molare Verhältnis von Isocyanatgruppen zu Aminogruppen wenigstens 30 : 1 beträgt. Am Ende des Verfahrensschritts a) liegt ein Gemisch von Polyisocyanatkomonente A und Wasser vor, bei dem beide Komponenten nicht durch eine feste Phase getrennt sind. Insbesondere ist das Polyisocyanat A nicht verkapselt und dadurch vom Waser isoliert. Auch zwischen den Verfahrensschritten a) und b) findet in der Beschichtungszusammensetzung vorzugsweise keine Reaktion statt, die zum Aufbau einer festen Phase zwischen Polyisocyanatkomponente A und Wasser führt, so das zu Beginn des Verfahrensschrittes b) wenigstens 90 % der in der Polyisocyanatkomponente vorliegenden Isocyanatgruppen direkten Kontakt mit Wasser haben.

Wenn eine wasserlösliche isocyanatreaktive Komponente B anwesend ist, so ist es bevorzugt, dass die Isocyanatkomponente A mit Wasser verdünnt wird, indem sie zu einer wässrigen Lösung der isocyanatreaktiven Komponente B zugegeben wird. In dieser Ausführungsform wird das zur Verdünnung benötigte Wasser also nicht in reiner Form, sondern als Gemisch mit einer anderen Komponente eingesetzt.

Der Trimerisierungskatalysator C kann hierbei im zur Verdünnung eingesetzten Wasser vorliegen. Er kann aber auch in der zu verdünnenden Isocyanatzusammensetzung A bereits enthalten sein. Es ist gleichfalls möglich, den Trimerisierungskatalysator C nach dem Verdünnen der Isocyanatzusammensetzung A zu der mit Wasser verdünnten Isocyanatzusammensetzung A hinzugeben.

Es ist weiterhin bevorzugt, dass auch zu Beginn des Verfahrensschrittes b) noch wenigstens 90 % der zu Beginn des Verfahrensschrittes a) vorliegenden freien Isocyanatgruppen der Isocyanatkomponente A vorliegen. Eine nennenswerte Umsetzung von freien Isocyanatgruppen nach der Verdünnung der Isocyanatkomponente A und vor ihrem Auftrag auf eine Oberfläche ist somit unerwünscht.

Verfahren und Vorrichtungen zum Auftragen der Beschichtungszusammensetzung auf eine Oberfläche sowie zur Beschichtung geeignete Oberflächen sind weiter oben in dieser Anmeldung beschrieben.

In einer besonders bevorzugten Ausführungsform der vorliegenden Erfindung wird die in Verfahrensschritt a) erhaltene mit Wasser verdünnte Isocyanatkomponente A vor Durchführung des Verfahrensschrittes b) mit einer isocyanatreaktiven Komponente B vermischt.

Alle weiteren oben gegebenen Definitionen der isocyanatreaktiven Komponente B gelten auch für diese Ausführungsform.

Wenn die erfindungsgemäße Beschichtungszusammensetzung eine isocyanatreaktive Komponente B enthält, so wird vorzugsweise eine mit Wasser verdünnte Isocyanatkomponente A getrennt von der isocyanatreaktiven Komponente B hergestellt wie oben beschrieben. Die isocyanatreaktive Komponente B wird, falls erforderlich, mit Wasser verdünnt und dann mit der mit Wasser verdünnten Isocyanatkomponente A vermischt. Diese Vermischung erfolgt höchstens 12 Stunden, bevorzugt höchstens 6 Stunden, stärker bevorzugt höchstens 4 Stunden vor dem Auftrag der Beschichtungszusammensetzung auf eine Oberfläche. In einer bevorzugten Ausführungsform erfolgt die Vermischung der mit Wasser verdünnten Isocyanatkomponente A und der isocyanatreaktiven Komponente B während des Auftragens der erfindungsgemäßen Beschichtungszusammensetzung auf eine Oberfläche. Dies kann besonders vorteilhaft unter Verwendung der Vorrichtungen und Verfahren erfolgen, die zur Anwendung zweikomponentiger Polyurethanlacke bereits bekannt sind.

Bei der kombinierten Verwendung einer mit Wasser verdünnten Isocyanatkomponente A und einer isocyanatreaktiven Komponente B wird der erfindungsgemäßen Beschichtungszusammensetzung vorzugsweise ein Urethanisierungskatalysator D zugesetzt. Besonders bevorzugt werden sowohl ein Trimerisierungskatalysator C und ein Urethanisierungskatalysator D zugesetzt. Die Zugabe der Katalysatoren kann gemeinsam oder getrennt zu jeder Komponente (A oder B) der Beschichtungszusammensetzung erfolgen. Ein Katalysator oder bei können auch jeder beliebigen Ausgangsverbindung (unverdünnte Isocyanatkomponente A, isocyanatreaktive Komponente B, zur Verdünnung verwendetes Wasser) zugesetzt werden.

In einer besonders bevorzugten Ausführungsform der vorliegenden Erfindung werden die Katalysatoren C und / oder D getrennt von der Isocyanatkomponente A und gegebenenfalls der isocyanatreaktiven Komponente B in wenigstens zwei Schichten auf das Substrat aufgetragen. Dieses Verfahren ist in der Europäischen Patentanmeldung mit der Anmeldungsnummer 17163485.0 näher beschrieben.

Bei dem erfindungsgemäßen Verfahren entstehen hochwertige Lacke mit einer weitestgehend homogenen Verteilung der umgesetzten hydrophilierten Isocyanate. Eine homogene Verteilung ist hierbei dadurch gekennzeichnet dass die erfindungsgemäße Beschichtungszusammensetzung nach Aushärtung nur einen Glaspunkt bestimmt mittels DSC aufweist.

Die folgenden Beispiele dienen nur dazu, die Erfindung zu illustrieren. Sie sollen den Schutzbereich der Patentansprüche in keiner Weise beschränken.

### Beispiele

### Beschreibung der Prüfmethoden für Beispiele 1 bis 14

**Pendelhärte** analog zum DIN EN ISO 1522: die Pendeldämpfungsprüfung ist ein Verfahren zur Bestimmung der viskoelastischen Eigenschaften von Beschichtungen nach DIN EN ISO 1522 in einem Pendeldämpfungs-Gerät und damit ein Maß für deren Härte. Es besteht aus einem Probentisch auf dem ein Pendel frei auf einer Probenoberfläche schwingen kann und einem Zählwerk. Die Anzahl der Schwingungen in einem definierten Winkelbereich ist ein Maß für die Härte einer Beschichtung und wird in Sekunden oder Anzahl der Schwingungen angegeben.

**Abriebbeständigkeit** im Taber Abraser Gerät mit CS10 Reibrollen (mittelhart). Die Lacke werden auf Probekörper aufgetragen. Nach der entsprechenden Härtungszeit wird die Prüfung durchgeführt. Der Probekörper (Substrat mit Beschichtung) wird gewogen und das Ausgangsgewicht ermittelt. Die Anzahl der Reibzyklen, nach denen man das Gewicht der Probekörper und damit den Abrieb wiegt, wird zuvor festgelegt. Der Probekörper wird auf dem Probenhalter befestigt, die Reibrollen und Absaugung aufgesetzt und die Abriebprüfung gestartet. Für die Bestimmung der Abriebwiderstand wird der Gewichtsverlust gemessen. Der Probekörper wird mit festgelegter Anzahl Umdrehungszyklen verkratzt und durch Differenzwägung wird der abgeriebene Anteil der Probe ermittelt.

### Chemische Beständigkeit

**Lackoberfläche Beständigkeit gegen Prüfsubstanz:** Die ausgehärteten Lackfilme werden auf ihre Widerstandsfähigkeit gegenüber Prüfsubstanzen untersucht. Der Lackfilm befindet sich in der Regel auf einer Glasplatte. Ein kleiner Wattebausch wird mit der Prüfsubstanz getränkt und auf die Lackoberfläche gelegt. Durch Abdecken, z.B. mittels eines Uhrglases oder eines Reagenzglases, wird die Verdunstung der Prüfsubstanz vermieden. Der Wattebausch bzw. der Zellstoff trocknet nicht aus. Nach vorab festgelegter Belastungsdauer wird die mit Prüfsubstanz getränkte Watte entfernt, die belastete Stelle abgetrocknet und sofort beurteilt, um einer Regeneration der Lackoberfläche zuvorzukommen. Man überprüft die Prüffläche visuell und durch Abtasten mit der Hand auf Veränderungen. Anschließend wird beurteilt, ob und welche Veränderungen auf der Prüffläche aufgetreten sind.

Beurteilt werden Erweichung bzw. Verfärbung der Lackoberfläche.
0 = keine Veränderungen feststellbar
1 = nur sichtbare Veränderung
2 = geringe Erweichung / leichte Farbtonveränderung
3 = deutliche Erweichung / mittlere Farbtonveränderung
4 = starke Erweichung / starke Farbtonveränderung
5 = Beschichtung komplett zerstört ohne Fremdeinwirkung / sehr starke Farbtonveränderung

### Formulierung:

Die erfindungsgemäßen Lacke werden in 2 Stufen gemischt. Zuerst die das hydrophilierte Isocyanat enthaltende Komponente (A) und parallel dazu die wässrige Komponente (B), jeweils in einem Dissolver mit 1500 U/min für mindestens 2 min. Im Anschluss werden die beiden Komponenten wiederum mittels eines Dissolvers bei 1500 U/min in der gewünschten Zusammensetzung für mindestens 1 min vermischt.

Die Reihenfolge der Zugabe der Bestandteile in den Dissolver für die Komponenten A und B und für die Mischung von A und B ist dabei:
A, Isocyanat Phase: 1. Hydrophilierte Isocyanate, 2.weitere organische Bestandteile, 3. Additive, 4. Füllstoffe, 5. Katalysatoren,.
B, Wasser Phase: 1. Wasser, 2. Organische Bestandteile, 3. Additive, 4. Füllstoffe, 5. Katalysatoren. A+B: 1. Komponente A, 2. Komponente B

### Applikation:

Die Lacke wurden 15 min nach Mischung mittels Aufziehrakel in gewünschter Dicke auf den gewünschten Substraten aufgezogen. Nach Härtung von 90 min bei 80°C gegebenenfalls im Anschluss 30 min bei 140°C sowie gegebenenfalls 1 bzw. 2 Tage bei 23°C werden Pendelhärte (s) und chemische Beständigkeit gemessen.

### Eingesetzte Rohstoffe:

### Hydrophilierte Isocyanate:

### Hydrophiles Polyisocyanat 1:

Hydrophiles, aliphatisches Polyisocyanat auf Basis Hexamethylendiisocyanat, mit einer Viskosität von 3.500 ± 1.000 mPa·s M014-ISO 3219/A.3 bei 23 °C, NCO-Gehalt 20,3 - 21,3 Gew.-% M105-ISO 11909, 11909, Hazenfarbzahl < 60 M017-EN 1557, Monomeres HDI ≤ 0,24 % M106-ISO 10283, Flammpunkt ca. 192 °C DIN EN ISO 2719, Dichte ca. 1,16 g/cm3 DIN EN ISO 2811, bezogen als Bayhydur XP 2655 von der Covestro Deutschland AG

### Isocyanate:

### Polyisocyanat 1:

Aliphatisches Polyisocyanat (niedrigviskoses HDI-Trimerisat), NCO-Gehalt 23,0 ± 0,5 % M105-ISO 11909, Viskosität bei 23 °C 1.200 ± 300 mPa·s M014-ISO 3219/A.3, Farbzahl (Hazen) ≤ 40 M017-EN 1557, Monomeres HDI ≤ 0,25 % M106-ISO 10283, Viskosität bei 25 °C ca. 1.100 mPa·s M014-ISO 3219/A.3, Äquivalentgewicht ca. 183, Flammpunkt ca. 158 °C DIN 53 213/1, Dichte bei 20 °C ca. 1,16 g/ml DIN EN ISO 2811, bezogen als Desmodur N 3600 von der Covestro Deutschland AG

### Polyole

Ethylenglykol, Butandiol 1,3, Butandiol 1,4, Diethylenglykol, Trimethylolpropan, Neopentylglykol, Glycerin, 1,1,1 Trimethylolpropan wurden von Aldrich bezogen.

### Polyol 1:

Linearaliphatisches Polycarbonatesterdiol, Säurezahl ≤ 3 mg KOH/g DIN EN ISO 2114, Viskosität bei 23 °C 30,500 ± 5,500 mPa·s DIN EN ISO 3219, Hydroxylgehalt 6.5 ± 0.45 % DIN 53 240/2, Wassergehalt ≤ 0.1 % DIN 51 777/1, Äquivalentgewicht ca. 260, Dichte bei 20 °C ca. 1.17 g/ml DIN EN ISO 2811-2,Flammpunkt ca. 150 °C DIN EN ISO 2719 bezogen als Desmophen C 1100 von der Covestro Deutschland AG

### Polyol 2:

Polyesterpolyurethandispersion ca. 41 % in Wasser/N-methylpyrrolidon, neutralisiert mit Dimethylethanolamin, ca. 53.5 : 4.5 : 1, Säurezahl 6.5 - 8.5 mg KOH/g DIN EN ISO 2114, Viskosität bei 23 °C, D = ca. 40 s-1, 500 - 1,500 mPa·s DIN EN ISO 3219/A.3., Feststoffgehalt (1 g/1 h/125 °C) 40 - 42 % DIN EN ISO 3251, pH(1 : 3 in demineralisiertem Wasser) 7.8 - 8.8 DIN ISO 976, OH-Gehalt, lösemittelfrei ca. 2.5 % DIN 53 240/2, minimale Filmbildungstemperatur MFT ca. 0 °C DIN ISO 2115, Durchschnittliche Partikelgröße ca. 50 nm Photonenkorrelationsspektroskopie, Dichte bei 20 °C ca. 1.10 g/ml DIN EN ISO 2811-2, Visuelles Erscheinungsbild opak bis milchig-bläulich, wolkig, bezogen von Covestro Deutschland AG als Bayhydrol U 241

### Polyol 3:

Aliphatische hydroxyfunktionelle Polyesterpolyurethandispersion ca. 55 % in Wasser/NMP/DMEA, ca. 42 : 2 : 1, Viskosität bei °C, D = ca. 240 s-1 250 - 650 mPa·s DIN EN ISO 3219/A.3, pH, 10 % in Wasser 7.0 - 7.5 DIN ISO 976, Säurezahl ca. 10.5 mg KOH/g DIN EN ISO 2114, Dichte bei 20 °C ca. 1.07 g/ml DIN EN ISO 2811, OH-Gehalt ca. 0.8 %, , minimale Filmbildungstemperatur (MFT) < 0 °C DIN ISO 2115, bezogen von Covestro Deutschland AG als Bayhydrol U 355.

### Polyol 4:

Anionische Polyesterpolyurethandispersion als, weiße, niedrigviskose Dispersion in Wasser mit einem Feststoffgehalt von ca. 40 %, Ausflusszeit 23 °C 4 mm DIN Becher ≤ 70 s AFAM 2008/10503, pH-Wert 6.5 ± 1 DIN ISO 976, Feststoffgehalt (0.9-1.1g / 1h / 125°C)40 ± 1 %, Dichte bei 23 °C 1.1 g/ml DIN EN ISO 2811 50 ± 1 % DIN EN ISO 3251, bezogen von Covestro Deutschland AG als Impranil DLN

### Polyol 5:

Aliphatische Polycarbonatester-Polyether-Polyurethandispersion als weiße wässrige Dispersion mit geringer Viskosität und einem Feststoffgehalt von 60 %, pH-Wert 8 ± 1 DIN ISO 976, Feststoffgehalt (0.9-1.1 g/1 h/125 °C) 60 ± 2 % DIN EN ISO 3251, Dichte bei 23 °C ca. 1.1 g/ml DIN EN ISO 2811, bezogen von Covestro Deutschland AG als Impranil DLU

### Additive

Additol XW 395 (Netzmittel) wurde bezogen von Firma Allnex
BYK 028 (Entschäumer) wurde bezogen von Firma BYK
DBTL (Katalysator) wurde bezogen von Firma TIB Chemicals als TIBKAT 218 3-Methoxy-n-Butylacetate (Colöser) bezogen von der Firma Celanese.

**Erfindungsgemäße Beispiele sind durch *gekennzeichnet**

| Versuch | 1^{∗} | 2^{∗} | 3^{∗} | 4^{∗} | 5^{∗} | 6^{∗} | 7^{∗} |
|---|---|---|---|---|---|---|---|
| Zusammensetzung | | | | | | | |
| Isocyanat Phase (Komponente | A) | | | | | | |
| Hydroph. Polyisocyanat 1(g) | 70 | 70 | 70 | 70 | 70 | 70 | 70 |
| 3-Methoxy-n-Butylacetate (g) | 14 | 14 | 14 | 14 | 14 | 14 | 14 |
| Wasser Phase (Komponente B) | | | | | | | |
| Glycerin (g) | 8,75 | | | | | | |
| Monoethylenglycol (g) | | 7,5 | | | | | |
| Butandiol (g) | | | 10,45 | | | | |
| Trimethylolpropan (g) | | | | 10,28 | | | |
| Butandiol 1,3 (g) | | | | | 10,45 | | |
| Neopentylglycol (g) | | | | | | 12,2 | |
| Diethylenglycol (g) | | | | | | | 12,02 |
| Additol XW 395 (g) | 0,56 | 0,56 | 0,56 | 0,56 | 0,56 | 0,56 | 0,56 |
| BYK 028 (g) | 0,02 | 0,02 | 0,02 | 0,02 | 0,02 | 0,02 | 0,02 |
| DBTL (g) | 0,01 | 0,01 | 0,01 | 0,01 | 0,01 | 0,01 | 0,01 |
| Wasser (g) | 6 | 6 | 6 | 3,95 | 6 | 3,51 | 6 |
| Versuch | 8^{∗} | 9^{∗} | 10^{∗} | 11^{∗} | 12^{∗} | 13^{∗} | 14^{∗} |

Zusammensetzung
Isocyanat Phase (Komponente A)

| | | | | | | | |
|---|---|---|---|---|---|---|---|
| Hydroph. Polyisocyanat 1 (g) | 35 | 35 | 35 | 35 | 35 | 35 | 35 |
| 3-Methoxy-n-Butylacetate (g) | 10 | 10 | 10 | 10 | 10 | 10 | 10 |
| WasserPhase (Komponente B) | | | | | | | |
| Glycerin (g) | 4,38 | | | | | | |
| Monoethylenglycol (g) | | 3,75 | | | | | |
| Butandiol (g) | | | 5,23 | | | | |
| Trimethylolpropan (g) | | | | 5,15 | | | |
| Butandiol 1,3 (g) | | | | | 5,23 | | |
| Neopentylglycol (g) | | | | | | 6,10 | |
| Diethylenglycol (g) | | | | | | | 6,02 |
| Additol XW 395 (g) | 0,28 | 0,28 | 0,28 | 0,28 | 0,28 | 0,28 | 0,28 |
| BYK 028 (g) | 0,01 | 0,01 | 0,01 | 0,01 | 0,01 | 0,01 | 0,01 |
| DBTL (g) | 0,02 | 0,02 | 0,02 | 0,02 | 0,02 | 0,02 | 0,02 |
| Wasser (g) | 50 | 50 | 50 | 50 | 50 | 50 | 50 |

| | | | | | | | |
|---|---|---|---|---|---|---|---|
| Beispiel | 1^{∗} | 2^{∗} | 3^{∗} | 4^{∗} | 5^{∗} | 6^{∗} | 7^{∗} |

Pendelhärte (s), Auftragsmenge 0,12 mm nass mit Rakel, auf Glas, Härtung 90 min bei 80°C und 30 min bei 140°C. Im Anschluss 2 Tage bei 23°C

| | | | | | | | |
|---|---|---|---|---|---|---|---|
| 90 min bei 80°C | | | | | | | |
| + 30 min 140°C | 165 | 52 | 10 | 125 | | | |
| + 2 Tage bei 23°C | 175 | 195 | 157 | 189 | 180 | 180 | 176 |
| Beispiel | 8^{∗} | 9^{∗} | 10^{∗} | 11^{∗} | 12^{∗} | 13^{∗} | 14^{∗} |

Pendelhärte (s), Auftragsmenge 0,18 mm nass mit Rakel, auf Glas, Härtung 90 min bei 80°C und 30 min bei 140°C. Im Anschluss 1 Tag bei 23°C

| | | | | | | | |
|---|---|---|---|---|---|---|---|
| und 90 min 80°C | | | | | | | |
| + 1 Tag bei 23°C | 48 | 42 | 123 | 108 | 113 | 49 | 41 |
| 90 min bei 80°C | | | | | | | |
| + 30 min 140°C | 167 | 169 | 141 | 122 | 139 | 64 | 147 |
| + 1 Tag bei 23°C | 172 | 182 | 169 | 167 178 | | 185 | 179 |

Chemikalienbeständigkeit (getränkter Wattebausch, unter Glashaube, optische Begutachtung, 0=unverändert, 5 Oberfläche zerstört)

| | | | | | | | |
|---|---|---|---|---|---|---|---|
| Beispiel | 8^{∗} | 9^{∗} | 10^{∗} | 11^{∗} | 12^{∗} | 13^{∗} | 14^{∗} |
| Aufgerakelt mit 0,18mm nass, Trocknung 90 min bei 80°C + 30 min bei 140°C + 14d bei 23°C | | | | | | | |
| Wasser (24h) | 0 | 0 | | | | | |
| Ethanol (5min/30min) | 1/1 | 0/0 | | | | | |
| Aceton (1min/5min) | 0/0 | 0/0 | | | | | |
| 2-Propanol (5min/10min) | 1/1 | 0/0 | | | | | |
| Xylol (5min/10min) | 0/0 | 0/0 | | | | | |
| Natronlauge (10%/24h) | 5 | 0 | 0 | 5 | 0 | 0 | 0 |
| Schwefelsäure(38%/24h) | 0 | 0 | 0 | 0 | 0 | 0 | 0 |

### Vergleichsbeispiel: 15

### Zusammensetzung

| | |
|---|---|
| Isocyanat Phase (Komponente A) | |
| Hydroph. Polyisocyanat (g) | 15 |
| 3-Methoxy-n-Butylacetate (g) | 5 |
| Wasser Phase (Komponente B) | |
| Polyol 1 (g) | 25 |
| Additol XW 395 (g) | 0,28 |
| BYK 028 (g) | 0,01 |
| DBTL (g) | 0,02 |
| Wasser (g) | 50 |

Pendelhärte (s), Auftragsmenge 0,18 mm nass mit Rakel, auf Glas, Härtung 90 min bei 80°C und 30 min bei 140°C. Im Anschluss 1 Tag bei 23°C

| | |
|---|---|
| 90 min bei 80°C | <10 |
| + 30 min 140°C | <10 |
| + 1 Tag bei 23°C | <10 |

In keinem Fall konnte mit dem nicht ausreichend wasserlöslichen bzw. dispergierbaren Polyol 1 ein homogener Film mit einer Pendelhärte nach Trocknung von > 10 (s) hergestellt werden.

Alle erfindungsgemäßen Formulierungen bestehend aus einer hydrophiliertes Isocyanat enthaltenden Komponente A und einer wässrigen Komponente B und erzeugten klare homogene Filme mit einer hohen Härte nach Trocknung.

In einem weiteren Versuch wurde die Gefrierstabilität verschiedener Formulierungen untersucht.

Dazu wurde eine isocyanatreaktive Komponente bei 23°C unter Scherung mit einem Dissolver bei 1500 U/min für 2 min mit Wasser, 0,3g Additol XW 395, 0,01g BYK 028 und 0,02 g DBTL zu einer Komponente B vermengt. Im Anschluss wurde die Komponente B für 1h bei -10°C und 1h bei 50°C, in jeweils 5 Wiederholungen getempert.

Die isocyanatreaktive Komponente B wurde für den Gefrierstabilitätstest jeweils so formuliert, dass sich ein Feststoffgehalt von 20 Gew.-% ergab. Die hydrophiliertes Isocyanat enthaltende Komponente

A bestehend aus einer Mischung von 15g hydrophilem Polyisocyanat 1 und 5g 3-Methoxy-n-Butylacetate wurde in der Menge so zugegeben, dass bei den niedermolekularen Polyolen eine Kennzahl von 1,1 und bei den Polyurethanpolyesterdispersionen jeweils ein Gewichtsverhältnis der festen Komponenten von 1:10 erreicht wurde.

| | |
|---|---|
| Erfindungsgemäße Formulierungen der Komponenten B* | Gefrierstabilität |
| Glycerin 25g verdünnt mit 75g Wasser | OK |
| Monoethylenglycol 25g verdünnt mit 75g Wasser | OK |
| Butandiol 25g verdünnt mit 75g Wasser | OK |
| Trimethylolpropan 25g verdünnt mit 75g Wasser | OK |
| Butandiol 1,3 25g verdünnt mit 75g Wasser | OK |
| Neopentylglycol 25g verdünnt mit 75g Wasser | OK |
| Diethylenglycol 25g verdünnt mit 75g Wasser | OK |

### Vergleichsbeispiele der Formulierungen der Komponente B

| | |
|---|---|
| Polyol 1 25g verdünnt mit 75g Wasser | getrennte Phase |
| Polyol 2 38g verdünnt mit 62g Wasser | koaguliert |
| Polyol 3 31g verdünnt mit 69g Wasser | koaguliert |
| Polyol 4 34g verdünnt mit 36g Wasser | koaguliert |
| Polyol 5 29g verdünnt mit 71g Wasser | koaguliert |

Nach einem Kältezyklus von 1h -10°C und 1h 50°C, in 5 Wiederholungen zeigten alle nicht erfindungsgemäßen Formulierungen der Komponente B eine deutliche Instabilität, die sich durch vollständige Koagulation und/oder irreversible Phasenseparation zwischen Wasserphase und Polyolphase ausdrückt.

Auf Basis von nur schlecht dispergierbaren, wenig wasserlöslichen Polyolen werden keine Frost und scherstabilen wässrigen Komponenten B erhalten. Wurden diese Phasen nach dem Frostzyklus mit einer erfindungsgemäßen Komponente A vermischt, so werden so wurden nur schlechte inhomogene bzw. klebrige Filme nach Trocknung erhalten.

Eine mangelnde Frost und Scherbeständigkeit wurde beim Einsatz herkömmlicher wässriger Dispersionen und Emulsionen als Komponente B beobachtet. Diese für den Einsatz als 2K Polyurethanlacke bekanntermaßen hervorragend geeigneten Produkte zeigen also eine schlechte Gefrierstabilität, weshalb bei Transport und Lagerung aufwendige Vorsichtsmaßnahmen wie z.B. Temperierung ergriffen werden müssen.

Demgegenüber zeigen die erfindungsgemäßen Komponenten B zum Einsatz in Kombination mit einer Isocyanat Phase enthaltend ein hydrophiliertes Isocyanat in Komponente A hervorragende Gefrier- und Scherstabilität. Dies äußert sich darin, dass selbst nach Gefrieren oder hoher Scherbeanspruchung die Abmischungen in Komponente B stabile Phasen bilden, die im Bedarfsfall nach vollständigem Einfrieren und Auftauen durch einfaches Rühren wieder in Ihre ursprüngliche Form überführt werden können. So ist es zum ersten Mal möglich auf Basis der erfindungsgemäßen Formulierungen transport- und gefrierstabile 2-Komponenten Isocyanat basierte wässrige Lackformulierungen zu erzeugen.

### 1K-Systeme

### Beschreibung der Prüfmethoden und Rohstoffe

Die Lösungsmittel- und Wasserbeständigkeiten wurden nach DIN EN ISO 4628-1:2016-07 ermittelt. Für den Test der Lösemittelbeständigkeiten wurden die Lösemittel Xylol (folgend auch als "Xy" abgekürzt), Methoxypropylacetat (folgend auch als "MPA" abgekürzt), Ethylacetat (folgend auch als "EA" abgekürzt) und Aceton (folgend auch als "Ac" abgekürzt) verwendet. Die Kontaktzeit betrug jeweils 5 min. Für die Messung der Wasserbeständigkeiten betrug die Kontaktzeit jeweils 24 h. Die Abmusterung wurde entsprechend der angeführten Norm durchgeführt. Die Prüffläche wird visuell und durch Verkratzung beurteilt, dabei wird folgende Klassifikation vorgenommen: 0 = Keine Veränderung feststellbar; 1 = Quellungsring, Oberfläche hart, nur sichtbare Veränderung; 2 = Quellungsring, geringe Erweichung; 3 = deutliche Erweichung (evtl. geringe Blasenbildung); 4 = Starke Erweichung (evtl. starke Blasenbildung), durchritzbar bis zum Untergrund; 5 = Beschichtung komplett zerstört ohne Fremdeinwirkung.

**Pendelhärte** analog zum DIN EN ISO 1522: die Pendeldämpfungsprüfung ist ein Verfahren zur Bestimmung der viskoelastischen Eigenschaften von Beschichtungen nach DIN EN ISO 1522 in einem Pendeldämpfungs-Gerät und damit ein Maß für deren Härte. Es besteht aus einem Probentisch auf dem ein Pendel frei auf einer Probenoberfläche schwingen kann und einem Zählwerk. Die Anzahl der Schwingungen in einem definierten Winkelbereich ist ein Maß für die Härte einer Beschichtung und wird in Sekunden oder Anzahl der Schwingungen angegeben.

Monomeres Hexamethylendiisocyanat und Bayhydur 3100 wurden von der Fa. Covestro, Leverkusen, bezogen. Bayhydur 3100 ist ein hydrophiliertes, oligomeres, aus Hexamethylendiisocyanat aufgebautes Polyisocyanat mit einem NCO-Gehalt von 17,4 Gew.-% und einem Restmonomerengehalt von weniger als 0,15 Gew.-%. Borchi Kat 22 wurde von der Fa. Borchers, Langenheim, bezogen. Alle weiteren hier nicht näher angeführten Chemikalien wurden von der von Fa. SigmaAldrich bezogen und ohne weitere Aufreinigung eingesetzt.

### Beispiel 15: Herstellung des Polyisocyanats 2

Das hier verwendete Polyisocyanat 2 wurde entsprechend dem Beispiel 11, Patentschrift EP-A 330 966, hergestellt. Die Reaktion wurde durch Zugabe von Dibutylphosphat bei einem NCO-Gehalt des Rohprodukts von 40 Gew.-% abgebrochen. Anschließend wurde nicht umgesetztes HDI mittels Dünnschichtverdampfung bei einer Temperatur von 130 °C und ein Druck von 0,2 mbar entfernt. Es wurde ein Produkt mit den folgenden Eigenschaften erhalten.

| | |
|---|---|
| NCO-Gehalt: | 21,8% |
| Monomeres HDI: | < 0,1 % |
| Viskosität (23 °C): | 3000 mPa·s |

### Beispiel 16

100 g des Polyisocyanats 2 wurde mit 2-[[2-(Dimethylamino)ethyl]-methylamino]ethanol (75,9 g) versetzt und die Reaktion wurde so lange bei 80 °C gerührt, bis ein NCO-Gehalt von kleiner 0,3% erreicht wurde. Es wurde ein Produkt mit den folgenden Eigenschaften erhalten.

| | |
|---|---|
| NCO-Gehalt: | < 0,3% |
| Monomeres HDI: | < 0,1% |

### Beschichtung 1

Das hydrophile Polyisocyanat Bayhydur 3100 (15,9 g) wurde mit BYK 331 (0,15 g), BorchiKat 22 (1,5 g, 10 Gew.-% in MPA) und dem Katalysator aus Beispiel 16 (0,9 g, 10 Gew.-% in MPA) versetzt. Anschließend wurde die Mischung mit Wasser (7,49 g) versetzt und im Speedmixer 1 min bei 2500 U/min vermischt. Die Emulsion wurde anschließend mit einem Rakel (50 µm) auf einen Glasträger aufgetragen.

### Beschichtung 2

Bayhydur 3100 (14,1 g) wurde mit BYK 331 (0,14 g), BorchiKat 22 (1,41 g, 10 Gew.-% in MPA) und dem Katalysator aus Beispiel 16 (0,85 g, 10 Gew.-% in MPA) versetzt. Anschließend wurde die Mischung mit Wasser (8,47 g) versetzt und im Speedmixer 1 min bei 2500 U/min vermischt. Die Emulsion wurde anschließend mit einem Rakel (50 µm) auf einen Glasträger aufgetragen.

### Beschichtung 3

Bayhydur 3100 (13,4 g) wurde mit BYK 331 (0,13 g), BorchiKat 22 (1,34 g, 10 Gew.-% in MPA) und dem Katalysator aus Beispiel 16 (0,80 g, 10 Gew.-% in MPA) versetzt. Anschließend wurde die Mischung mit Wasser (9,36 g) versetzt und im Speedmixer 1 min bei 2500 U/min vermischt. Die Emulsion wurde anschließend mit einem Rakel (50 µm) auf einen Glasträger aufgetragen.

### Referenz 1

### Bayhydur 3100

### Ergebnisse

In der unten stehenden Tabelle sind die Ergebnisse der drei Beschichtungssysteme zusammengefasst. In den Versuchsreihen wurde gefunden, dass in Gegenwart eines Zinkcarboxylat-Katalysator Polyisocyanate aus wässrigen Lösungen vernetzt werden können. Dies soll anhand von Versuchs Nr.1 veranschaulicht werden. In Gegenwart des Zinkkatalysator Borchi Kat 22 konnte nach Einbrennen bei 120 °C eine vollständige Härtung des Films mit Pendelhärten von 120 s und sehr guten Lösemittelbeständigkeiten erzielt werden. Ohne Katalysator konnte hingegen keine Vernetzung des Materials beobachtet werden.

Wässrige Beschichtungsformulierungen auf Basis von Polyisocyanaten.

**i.O. = in Ordnung**

| | Beschichtung 1 | Beschichtung 1 | Beschichtung 2 | Beschichtung 2 | Beschichtung 3 | Referenz 1 (nicht erfindungsgemäß) |
|---|---|---|---|---|---|---|
| Versuch | Nr.1 | Nr.2 | Nr.3 | Nr.4 | Nr.5 | Nr.6 |
| Einbrenntemperat ur (°C) | 120 | 140 | 120 | 140 | 140 | 140 |
| Optik | i.O. | i.O. | i.O. | i.O. | i.O | - |
| Filmdicke (µm) | 50 | 50 | 50 | 50 | 50 | - |
| Pendelhärte (s) | 179 | 193 | 178 | 191 | 21 | < 15 |
| Anlösbarkeit (Xy, MPA, EA, Ac) | 1144 | 1014 | 1144 | 1014 | 4444 | 5555 |

## Patentansprüche

1. Eine Beschichtungszusammensetzung enthaltend eine mit Wasser verdünnte Isocyanatkomponente A mit einer Isocyanatkonzentration zwischen 2 Gew.-% und 40 Gew.-% definiert als Gewichtsanteil der Isocyanatgruppe am Gesamtmolekül, welche wenigstens ein hydrophiliertes Polyisocyanat enthält, dessen Isocyanatgruppen direkten Kontakt mit Wasser haben, wobei die Beschichtungszusammensetzung einen Gehalt an polymeren Polyolen von höchstens 10 Gew.-% aufweist.

2. Die Beschichtungszusammensetzung nach Anspruch 1, wobei das hydrophilierte Polyisocyanat durch einen externen Emulgator, der nicht kovalent an das Polyisocyanat gebunden ist, hydrophiliert ist.

3. Die Beschichtungszusammensetzung nach Anspruch 1, wobei das hydrophilierte Polyisocyanat durch einen internen Emulgator, der kovalent an das Polyisocyanat gebunden ist, hydrophiliert ist

4. Die Beschichtungszusammensetzung gemäß einem der Ansprüche 1 bis 3, wobei die polymeren Polyole ein zahlenmittleres Molekulargewicht von wenigstens 20.000 g/mol aufweisen.

5. Die Beschichtungszusammensetzung nach einem der Ansprüche 1 bis 4, wobei der zur Verdünnung der Isocyanatkomponente A eingesetzte Wasseranteil so bemessen ist, dass die Viskosität bestimmt nach M014-ISO 3219/A.3 der verdünnten Isocyanatkomponente A gegenüber einer ansonsten identischen, aber wasserfreien Isocyanatkomponente A um wenigstens 40 % herabgesetzt ist.

6. Die Beschichtungszusammensetzung nach einem der Ansprüche 1 bis 5, wobei die Isocyanatkomponente A als Dispersion mit einer mittleren Teilchengröße von höchstens 5 µm oder als wässrige Lösung vorliegt.

7. Die Beschichtungszusammensetzung gemäß einem der Ansprüche 1 bis 6 zusätzlich enthaltend einen Trimerisierungskatalysator C.

8. Die Beschichtungszusammensetzung gemäß einem der Ansprüche 1 bis 7, zusätzlich enthaltend eine isocyanatreaktive Komponente B mit einem Molekulargewicht von höchstens 1.800 g/mol.

9. Die Beschichtungszusammensetzung gemäß Anspruch 8, wobei die isocyanatreaktive Komponente B ausgewählt ist aus der Gruppe bestehend aus Glycerin, Monoethylenglykol, 1,4-Butandiol, Trimethylolpropan, 1,3-Butandiol, 1,2 Butandiol, Neopentylglykol und Diethylenglykol.

10. Die Beschichtungszusammensetzung gemäß Anspruch 8 oder 9 zusätzlich enthaltend einen Urethanisierungskatalysator D.

11. Verwendung der Beschichtungszusammensetzung gemäß einem der Ansprüche 1 bis 10 zur Beschichtung einer Oberfläche.

12. Ein Verfahren zur Herstellung einer Beschichtung enthaltend die Schritte
a) Verdünnen einer Isocyanatkomponente A, die wenigstens ein hydrophiliertes Polyisocyanat enthält, mit Wasser, so dass die Isocyanatgruppen des hydrophilierten Isocyanats in direktem Kontakt mit Wasser stehen;
b) Auftragen der in Verfahrensschritt a) erhaltenen Beschichtungszusammensetzung, wobei zu Beginn des Verfahrensschrittes b) noch wenigstens 90 % der zu Beginn des Verfahrensschrittes a) vorliegenden freien Isocyanatgruppen der Isocyanatkomponente A vorliegen, auf eine Oberfläche; und
c) Aushärten der Beschichtungszusammensetzung, mit der Maßgabe dass die aushärtende Beschichtungszusammensetzung einen Gehalt an polymeren Polyolen von höchstens 10 Gew.-% aufweist.

13. Das Verfahren nach Anspruch 11, wobei in Verfahrensschritt a) die Isocyanatkomponente A vor Durchführung des Verfahrensschrittes b) mit einer in Wasser gelösten isocyanatreaktiven Komponente B vermischt wird.

14. Das Verfahren nach Anspruch 12 oder 13, wobei die Isocyanatkomponente in Verfahrensschritt a) so mit einer Menge an Wasser verdünnt wird, dass ihre Viskosität um wenigstens 40 % herabgesetzt wird.

15. Ein mit einer nach dem Verfahren gemäß eines der Ansprüche 12 bis 14 erhältlichen Beschichtung beschichtetes Substrat.

## Claims

1. A coating composition comprising a water-thinned isocyanate component A having an isocyanate concentration between 2% by weight and 40% by weight, defined as the proportion by weight of the isocyanate group in the overall molecule that contains at least one hydrophilized polyisocyanate, the isocyanate groups of which are in direct contact with water, wherein the coating composition has a content of polymeric polyols of not more than 10% by weight.

2. The coating composition according to Claim 1, wherein the hydrophilized polyisocyanate has been hydrophilized by an external emulsifier not covalently bonded to the polyisocyanate.

3. The coating composition according to Claim 1, wherein the hydrophilized polyisocyanate has been hydrophilized by an internal emulsifier covalently bonded to the polyisocyanate.

4. The coating composition according to any of Claims 1 to 3, wherein the polymeric polyols have a number-average molecular weight of at least 20 000 g/mol.

5. The coating composition according to any of Claims 1 to 4, wherein the water content used to thin the isocyanate component A is such that the viscosity, determined to M014-ISO 3219/A.3, of the thinned isocyanate component A is lowered by at least 40% compared to an otherwise identical but anhydrous isocyanate component A.

6. The coating composition according to any of Claims 1 to 5, wherein the isocyanate component A is in the form of a dispersion having an average particle size of not more than 5 µm or of an aqueous solution.

7. The coating composition according to any of Claims 1 to 6, additionally comprising a trimerization catalyst C.

8. The coating composition according to any of Claims 1 to 7, additionally comprising an isocyanate-reactive component B having a molecular weight of not more than 1800 g/mol.

9. The coating composition according to Claim 8, wherein the isocyanate-reactive component B is selected from the group consisting of glycerol, monoethylene glycol, butane-1,4-diol, trimethylolpropane, butane-1,3-diol, butane-1,2-diol, neopentyl glycol and diethylene glycol.

10. The coating composition according to Claim 8 or 9, additionally comprising a urethanization catalyst D.

11. Use of the coating composition according to any of Claims 1 to 10 for coating of a surface.

12. A method of producing a coating, comprising the steps of
a) thinning an isocyanate component A containing at least one hydrophilized polyisocyanate with water, such that the isocyanate groups of the hydrophilized isocyanate are in direct contact with water;
b) applying the coating composition obtained in method step a), wherein at least 90% of the free isocyanate groups of the isocyanate component A that were present at the start of method step a) are still present at the start of method step b), to a surface; and
c) curing the coating composition, with the proviso that the curing coating composition has a content of polymeric polyols of not more than 10% by weight.

13. The method according to Claim 11, wherein, in method step a), the isocyanate component A is mixed with a water-dissolved isocyanate-reactive component B prior to performance of method step b).

14. The method according to Claim 12 or 13, wherein the isocyanate component is thinned in method step a) with an amount of water in such a way that its viscosity is lowered by at least 40%.

15. A substrate coated with a coating obtainable by the method according to any of Claims 12 to 14.

## Revendications

1. Composition de revêtement contenant un composant isocyanate A dilué à l'eau, présentant une concentration en isocyanate entre 2% en poids et 40% en poids, définie comme la proportion pondérale des groupes isocyanate sur la molécule totale, qui contient au moins un polyisocyanate hydrophilisé, dont les groupes isocyanate sont en contact direct avec l'eau, la composition de revêtement présentant une teneur en polyols polymères d'au plus 10% en poids.

2. Composition de revêtement selon la revendication 1, le polyisocyanate hydrophilisé étant hydrophilisé par un émulsifiant externe, qui n'est pas lié de manière covalente au polyisocyanate.

3. Composition de revêtement selon la revendication 1, le polyisocyanate hydrophilisé étant hydrophilisé par un émulsifiant interne, qui est lié de manière covalente au polyisocyanate.

4. Composition de revêtement selon l'une quelconque des revendications 1 à 3, les polyols polymères présentant un poids moléculaire moyen en nombre d'au moins 20.000 g/mole.

5. Composition de revêtement selon l'une quelconque des revendications 1 à 4, la proportion d'eau utilisée pour la dilution du composant isocyanate A étant dimensionnée de manière telle que la viscosité, déterminée selon M014-ISO 3219/A.3, du composant isocyanate A dilué par rapport à un composant isocyanate A identique pour le reste mais sans eau, est abaissée d'au moins 40%.

6. Composition de revêtement selon l'une quelconque des revendications 1 à 5, le composant isocyanate A se trouvant sous forme de dispersion présentant une grosseur moyenne de particule d'au plus 5 µm ou sous forme de solution aqueuse.

7. Composition de revêtement selon l'une quelconque des revendications 1 à 6, contenant en plus un catalyseur de trimérisation C.

8. Composition de revêtement selon l'une quelconque des revendications 1 à 7, contenant en plus un composant réactif avec isocyanate B présentant un poids moléculaire d'au plus 1800 g/mole.

9. Composition de revêtement selon la revendication 8, le composant réactif avec isocyanate B étant choisi dans le groupe constitué par le glycérol, le monoéthylèneglycol, le 1,4-butanediol, le triméthylolpropane, le 1,3-butanediol, le 1,2-butanediol, le néopentylglycol et le diéthylèneglycol.

10. Composition de revêtement selon la revendication 8 ou 9, contenant en plus un catalyseur d'uréthanisation D.

11. Utilisation de la composition de revêtement selon l'une quelconque des revendications 1 à 10 pour le revêtement d'une surface.

12. Procédé pour la fabrication d'un revêtement, contenant les étapes
a) dilution d'un composant isocyanate A, qui contient au moins un polyisocyanate hydrophilisé, à l'eau de telle sorte que les groupes isocyanate de l'isocyanate hydrophilisé sont en contact direct avec l'eau ;
b) application de la composition de revêtement obtenue dans l'étape de procédé a), au moins 90 %des groupes isocyanate libres du composant isocyanate A qui sont présents au début de l'étape de procédé a) étant encore présents au début de l'étape de procédé b), sur une surface ; et
c) durcissement de la composition de revêtement, sous réserve que la composition de revêtement qui durcit présente une teneur en polyols polymères d'au plus 10% en poids.

13. Procédé selon la revendication 11, le composant isocyanate A dans l'étape de procédé a) étant mélangé, avant la réalisation de l'étape de procédé b), avec un composant réactif avec isocyanate B dissous dans l'eau.

14. Procédé selon la revendication 12 ou 13, le composant isocyanate dans l'étape de procédé a) étant dilué par une quantité d'eau telle que sa viscosité est abaissée d'au moins 40%.

15. Substrat revêtu par un revêtement pouvant être obtenu selon le procédé selon l'une quelconque des revendications 12 à 14.
